(19) **Europäisches Patentamt**

**European Patent Office**

**Office européen des brevets**

(11) **EP 4 498 742 A1**

(12) **EUROPEAN PATENT APPLICATION**
published in accordance with Art. 153(4) EPC

(43) Date of publication:
**29.01.2025 Bulletin 2025/05**

(21) Application number: **23773869.5**

(22) Date of filing: **21.03.2023**

(51) International Patent Classification (IPC):
**H04W 72/04** (2023.01)

(52) Cooperative Patent Classification (CPC):
**H04B 7/0456; H04B 7/06; H04L 1/00; H04W 72/04**

(86) International application number:
**PCT/CN2023/082882**

(87) International publication number:
**WO 2023/179622 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 CN 202210286749**

(71) Applicant: **ZTE Corporation**
**Shenzhen, Guangdong 518057 (CN)**

(72) Inventors:
 • **LI, Lun**
  **Shenzhen, Guangdong 518057 (CN)**

 • **WU, Hao**
  **Shenzhen, Guangdong 518057 (CN)**
 • **XIAO, Huahua**
  **Shenzhen, Guangdong 518057 (CN)**
 • **LI, Yong**
  **Shenzhen, Guangdong 518057 (CN)**
 • **LU, Zhaohua**
  **Shenzhen, Guangdong 518057 (CN)**

(74) Representative: **Casalonga**
 **Casalonga & Partners**
 **Bayerstraße 71/73**
 **80335 München (DE)**

(54) **CHANNEL STATE INFORMATION PROCESSING METHOD, TERMINAL, BASE STATION, AND MEDIUM**

(57)    Provided are a channel state information processing method, a terminal, a base station, and a medium. The channel state information processing method comprises: performing grouping preprocessing on initial channel state information in a target dimension, so as to obtain a plurality of pieces of first channel state information; encoding the plurality of pieces of first channel state information, so as to generate second channel state information; and feeding back the second channel state information.

FIG. 1

EP 4 498 742 A1

**Description**

This application claims a priority of Chinese Patent Application No. 202210286749.1, filed on March 22, 2022, the entire contents of which are incorporated into this application by reference.

TECHNICAL FIELD

The present disclosure relates to the field of communication technologies, and in particular to, a channel state information processing method, a terminal, a base station, and a computer readable medium.

BACKGROUND

Multi-antenna technology has always been one of the important technologies in communication standards during development from a long term evolution (LTE) access technology to a new radio (NR) access technology. With the continuous improvement of a communication standard indicator, how to acquire channel state information (CSI) more accurately has become a key to improve performance of the multi-antenna technology.

SUMMARY

In a first aspect, embodiments of the present disclosure provide a channel state information processing method, where the channel state information processing method includes: performing, in a target dimension, grouping preprocessing on initial channel state information to obtain a plurality pieces of first channel state information; encoding the plurality pieces of first channel state information to generate second channel state information; and feeding back the second channel state information.

In a second aspect, the embodiments of the present disclosure provide a channel state information processing method, where the channel state information processing method includes: receiving second channel state information; decoding the second channel state information to obtain a plurality pieces of third channel state information, where the plurality pieces of third channel state information are in one-to-one correspondence with a plurality pieces of first channel state information obtained by performing, in a target dimension, grouping preprocessing on initial channel state information; and generating target channel state information according to the plurality pieces of third channel state information.

In a third aspect, the embodiments of the present disclosure provide a terminal, where the terminal includes: one or more processors; a memory with one or more programs stored thereon, where one or more programs are executed by the one or more processors, so as to enable the one or more processors to implement the channel state information processing method described in the first aspect of the embodiments of the present disclosure; and one or more I/O interfaces, connected between the processor and the memory, and configured to implement information interaction between the processor and the memory.

In a fourth aspect, the embodiments of the present disclosure provide a base station, where the base station includes: one or more processors; a memory with one or more programs stored thereon, where the one or more programs are executed by the one or more processors, so as to enable the one or more processors to implement the channel state information processing method described in the second aspect of the embodiments of the present disclosure; and one or more I/O interfaces, connected between the processor and the memory, and configured to implement information interaction between the processor and the memory.

In a fifth aspect, the embodiments of the present disclosure provide a computer readable medium with a computer program stored thereon, where the program, upon being executed by a processor, implements the channel state information processing method described in the above-mentioned any item.

The embodiments of the present disclosure provide a terminal and a channel state information processing method applied to the terminal, a base station and a channel state information processing method applied to the base station, and a computer readable medium. In the embodiments of the present disclosure, the terminal performs, in a target dimension, grouping preprocessing on initial channel state information to obtain a plurality pieces of first channel state information, and feeds back second channel state information obtained by encoding the first channel state information; and the base station can receive and decode the second channel state information to obtain target channel state information as an estimate of the initial channel state information, thereby completing a feedback of the channel state information. A size of channel state information processed by an encoder and a decoder is smaller than that of the initial channel state information, so that an amount of data input to the encoder and the decoder can be reduced, which is beneficial to simplifying an encoder model and a decoder model, and further, achieving the reduction of overheads of an operation at a terminal and a feedback of channel state information on a premise of ensuring accuracy of the feedback of the channel state information.

## BRIEF DESCRIPTION OF THE DRAWINGS

In order to explain technical solutions in the embodiments of the present disclosure more clearly, the accompanying drawings required to be used in some embodiments of the present disclosure will be introduced briefly. However, the accompanying drawings in the following description are merely accompanying drawings of some embodiments of the present disclosure, and for those skilled in the art, other accompanying drawings may also be obtained according to these accompanying drawings. In addition, the accompanying drawings in the following description may be regarded as schematic diagrams, and are not limitations on an actual size of a product, an actual process of a method, an actual timing of a signal, etc., involved in the embodiments of the present disclosure.

FIG. 1 is a flow chart of a channel state information processing method according to some embodiments.
FIG. 2 is a flow chart of another channel state information processing method according to some embodiments.
FIG. 3 is a flow chart of yet another channel state information processing method according to some embodiments.
FIG. 4 is a flow chart of yet another channel state information processing method according to some embodiments.
FIG. 5 is a flow chart of yet another channel state information processing method according to some embodiments.
FIG. 6 is a flow chart of another channel state information processing method according to some embodiments.
FIG. 7 is a component block diagram of a terminal according to some embodiments.
FIG. 8 is a component block diagram of a base station according to some embodiments.
FIG. 9 is a component block diagram of a computer readable medium according to some embodiments.
FIG. 10 is a schematic diagram of grouping preprocessing according to some embodiments.
FIG. 11 is a schematic diagram of another grouping preprocessing according to some embodiments.
FIG. 12 is a schematic diagram of yet another grouping preprocessing according to some embodiments.
FIG. 13 is a schematic diagram of yet another grouping preprocessing according to some embodiments.
FIG. 14 is a schematic diagram of yet another grouping preprocessing according to some embodiments.
FIG. 15 is a schematic diagram of yet another grouping preprocessing according to some embodiments.
FIG. 16 is a schematic diagram of yet another grouping preprocessing according to some embodiments.
FIG. 17A is a schematic diagram of yet another grouping preprocessing according to some embodiments.
FIG. 17B is a schematic diagram of yet another grouping preprocessing according to some embodiments.
FIG. 18 is a schematic diagram of yet another grouping preprocessing according to some embodiments.
FIG. 19 is a schematic diagram of yet another grouping preprocessing according to some embodiments.
FIG. 20 is a schematic diagram of yet another grouping preprocessing according to some embodiments.
FIG. 21 is a schematic diagram of yet another grouping preprocessing according to some embodiments.
FIG. 22 is a schematic diagram of yet another grouping preprocessing according to some embodiments.
FIG. 23 is a schematic diagram of yet another grouping preprocessing according to some embodiments.
FIG. 24 is a schematic diagram of a channel state information feedback system according to some embodiments.
FIG. 25 is a schematic diagram for feeding back polarization phase assistance information according to some embodiments.

## DETAILED DESCRIPTION

In order to make those skilled in the art to better understand the technical solutions of the embodiments of the present disclosure, a channel state information processing method, a terminal, a base station, and a computer readable medium provided by the embodiments of the present disclosure are described in detail below in conjunction with the accompanying drawings.

Example embodiments will be described more fully hereinafter with reference to the accompanying drawings, but the example embodiments may be embodied in different forms and should not be construed as limitations on the embodiments set forth herein.

Hereinafter, the terms, "first", "second", are used for descriptive purposes only and are not to be construed as indicating or implying relative importance or implicitly indicating a number of indicated technical features. The embodiments and features in the embodiments of the present disclosure may be combined with each other without conflict.

As used herein, the term "and/or" includes any and all combinations of one or more of associated listed items.

The terms used herein are used for describing specific embodiments only and is not intended to limit the present disclosure. As used herein, the singular forms "a/an", and "the/said" are intended to include plural forms as well, unless the context clearly states otherwise. It will also be understood that when the terms "comprise/include" and/or "made of..." are used in the specification, it specifies the presence of features, integers, steps, operations, elements and/or components, but does not exclude the presence or addition of one or more other features, integers, steps, operations, elements, components and/or groups thereof.

Unless otherwise defined, all terminologies (including technical and scientific terminologies) used herein have the same meaning as commonly understood by those ordinary skilled in the art. It will also be understood that those terminologies such as those defined in commonly used dictionaries should be interpreted as having a meaning consistent with a meaning in the context of the related art and the embodiments of the present disclosure, and will not be interpreted as having an idealized or overly formal meaning unless explicitly defined herein.

In a multi-antenna system, downlink channel state information fed back from a user equipment (UE) to a base station (BS) is affected by a large-scale antenna array, and an overhead for feeding back the downlink channel state information is positively correlated with a number of antennas. The base station includes any one of gNB, eNB, and Node B. In a complex environment scenario, accuracy of the downlink channel state information recovered by the base station according to codebook information fed back by the UE should be enhanced.

An artificial intelligence (AI) technology exhibits a powerful feature extraction and learning capability in fields such as computer vision, natural language processing, and speech signal processing. In some related technologies, the artificial intelligence technology is introduced into a wireless communication system to break through some related technical bottlenecks in a wireless communication system. However, in an AI-based CSI feedback technology, an amount of data input to a neural network is large and a model of the neural network is relatively complex, which greatly increases a number of parameters and an amount of floating-point operations of the neural network, thereby resulting in an increased overhead cost for processing at a terminal and a feedback of CSI.

Some embodiments of the present disclosure provide a lightweight AI solution, which reduces an overhead cost of an operation at a terminal and a feedback of CSI on a premise of ensuring accuracy of the feedback of the CSI by performing preprocessing on complex input data to an encoder at the terminal.

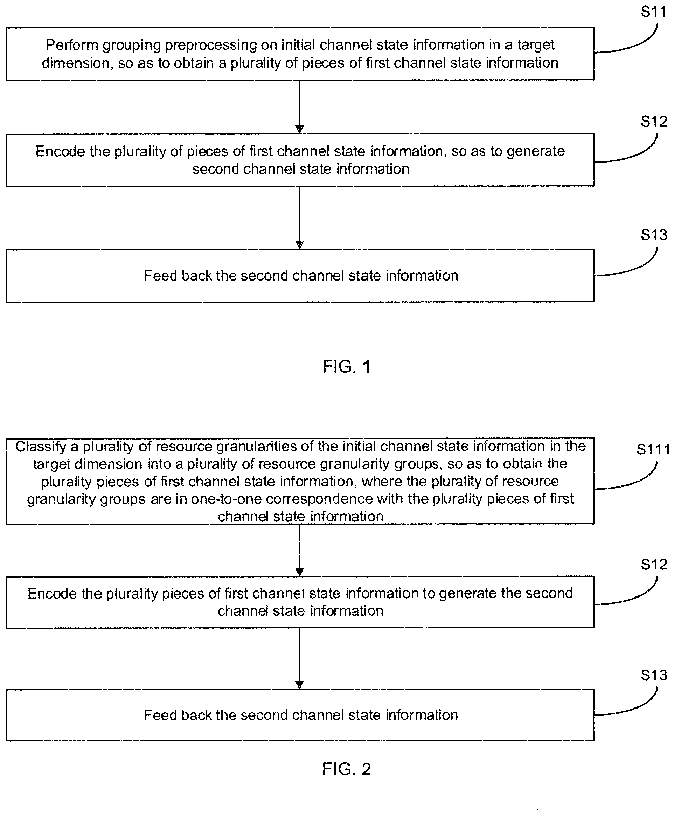

In a first aspect, referring to FIG. 1, some embodiments of the present disclosure provide a channel state information processing method, where the method includes S11 to S13.

In S11, grouping preprocessing is performed on initial channel state information in a target dimension to obtain a plurality pieces of first channel state information.

In some embodiments, a terminal obtains the initial channel state information according to received channel state reference information, for example, a channel state information reference signal (CSI-RS). In the embodiments of the present disclosure, the initial channel state information may be time domain channel information or may be frequency domain channel information, which is not particularly limited in the embodiments of the present disclosure.

The terminal is not particularly limited in the embodiments of the present disclosure, and the terminal may be any one of a mobile phone, a data card, a notebook, and various manufacturing equipments in a factory.

In the embodiments of the present disclosure, the initial channel state information has a plurality of dimensions. For example, the plurality of dimensions include: a frequency domain dimension, a space domain dimension, a layer dimension, and a time domain dimension. Target dimension is not particularly limited in the embodiments of the present disclosure. In some embodiments, the target dimension includes at least one of: a frequency domain dimension, a space domain dimension, a layer dimension, and a time domain dimension.

For example, the target dimension may be any one of the frequency domain dimension, the space domain dimension, the layer dimension, and the time domain dimension. Accordingly, performing, in the target dimension, grouping preprocessing on the initial channel state information refers to performing grouping preprocessing on the initial channel state information in one of the frequency domain dimension, the space domain dimension, the layer dimension, and the time domain dimension. For another example, the target dimension may be a combination of at least two of the frequency domain dimension, the space domain dimension, the layer dimension, and the time domain dimension. Accordingly, performing, in the target dimension, grouping preprocessing on the initial channel state information refers to performing grouping preprocessing on the initial channel state information in at least two of the frequency domain dimension, the space domain dimension, the layer dimension, and the time domain dimension.

The embodiments of the present disclosure do not particularly limit how to perform grouping preprocessing on the initial channel state information in the target dimension.

In the embodiments of the present disclosure, a size of the first channel state information in the target dimension, obtained after grouping preprocessing is performed on the initial channel state information in the target dimension, is smaller than a size of the initial channel state information in the target dimension.

For example, the initial channel state information is a matrix with a size of $N_1 \times N_2 \times L_1 \times C$, where $N_1$ corresponds to a frequency domain dimension, $N_2$ corresponds to a space domain dimension, $L_1$ corresponds to a layer dimension, and $C$ corresponds to a dimension of channels. After grouping preprocessing is performed on the initial channel state by using the frequency domain dimension as the target dimension, obtained first channel state information is expressed as a matrix with a size of $N_3 \times N_2 \times L_1 \times C$, where $N_3$ corresponds to a frequency domain dimension, and $N_3 < N_1$. That is, a size of the first channel state information in the target dimension obtained by performing grouping preprocessing on the initial channel state information is smaller than a size of the initial channel state information in the target dimension.

In S12, the plurality pieces of first channel state information are encoded to generate second channel state information.

In the embodiments of the present disclosure, encoding the plurality pieces of first channel state information in S12 refers to inputting the first channel state information into an encoder with a neural network architecture for encoding, and compressing the encoded first channel state information. Compared with the initial channel state information as an input to the encoder, an amount of input data to the encoder can be reduced by using the first channel state information as the input of the encoder.

In S13, the second channel state information is fed back.

In the channel state information processing method provided by the embodiments of the present disclosure, after grouping preprocessing is performed on the initial channel state information in the target dimension, a plurality pieces of first channel state information are obtained; and a size of the first channel state information is smaller than a size of the initial channel state information, so that an amount of input data to an encoder is reduced, which is beneficial to simplifying an encoder model, and further, reducing an overload of an operation at a terminal and a feedback of the channel state information on a premise of ensuring accuracy of the feedback of the channel state information.

In some embodiments, referring to FIG. 2, S11 includes S111.

In S111, a plurality of resource granularities of the initial channel state information in the target dimension are classified as a plurality of resource granularity groups, so as to obtain the plurality pieces of first channel state information. The plurality of resource granularity groups are in one-to-one correspondence with the plurality pieces of first channel state information.

In the embodiments of the present disclosure, the initial channel state information has a plurality of resource granularities in the target dimension, and a resource granularity is a smallest unit for dividing the initial channel state information in the target dimension. In the embodiments of the present disclosure, if target dimensions are different, the resource granularities are also different. For example, in a case where the target dimension is a frequency domain dimension, the resource granularity is a frequency domain granularity; in a case where the target dimension is a space domain dimension, the resource granularity is an antenna port or a polarization direction; in a case where the target dimension is a layer dimension, the resource granularity is a layer granularity; and in a case where the target dimension is a time domain dimension, the resource granularity is a time domain granularity. Accordingly, in a case where the target dimension is a frequency domain dimension, grouping preprocessing is performed on the initial channel state information in the frequency domain dimension to obtain a plurality of frequency domain granularity groups composed of frequency domain granularities; in a case where the target dimension is a space domain dimension, grouping preprocessing is performed on the initial channel state information in the space domain dimension to obtain a plurality of antenna port groups composed of antenna ports or a plurality of polarization direction groups composed of polarization directions; in a case where the target dimension is a layer dimension, grouping preprocessing is performed on the initial channel state information in the layer dimension to obtain a plurality of layer granularity groups composed of layer granularities; and in a case where the target dimension is a time domain dimension, grouping preprocessing is performed on the initial channel state information in the time domain dimension to obtain a plurality of time domain granularity groups composed of time domain granularities.

Taking the initial channel state information being a matrix with a size of $N_1 \times N_2 \times L_1 \times C$ and the frequency domain dimension being the target dimension as an example, the initial channel state information includes $N_1$ frequency domain granularities, and each frequency domain granularity is a matrix with a size of $N_2 \times L_1 \times C$. The $N_1$ frequency domain granularities are classified as a plurality of resource granularity groups in the frequency domain dimension, each resource granularity group includes $K_1$ frequency domain granularities, and obtained corresponding first channel state information is a matrix with a size of $K_1 \times N_2 \times L_1 \times C$, and $K_1 < N_1$.

The embodiments of the present disclosure do not particularly limit how to divide the plurality of resource granularities of the initial channel state information in the target dimension into the plurality of resource granularity groups. It should be noted that the grouping manner provided by the embodiments of the present disclosure is universal in the target dimension, such as the frequency domain dimension, the space domain dimension, the layer dimension, or the time domain dimension, etc.

In some embodiments, dividing the plurality of resource granularities of the initial channel state information in the target dimension into the plurality of resource granularity groups, so as to obtain the plurality pieces of first channel state information in S111, includes the following.

Every continuous grouping granularity number of resource granularities among the plurality of resource granularities of the initial channel state information in the target dimension are classified as a resource granularity group according to the grouping granularity number, so as to obtain the plurality pieces of first channel state information. The grouping granularity number characterizes a number of resource granularities in the resource granularity group.

It should be noted that, in the embodiments of the present disclosure, indexes of the plurality of resource granularities of the initial channel state information in the target dimension are numbered in sequence, and the continuous resource granularities are resource granularities having continuous indexes.

Taking the initial channel state information being a matrix with a size of $N_1 \times N_2 \times L_1 \times C$ and the frequency domain dimension being the target dimension as an example, $N_1$ frequency domain granularities of the initial channel state information are numbered in sequence as 1, 2, ... , $N_1$, and every $K_1$ continuous frequency domain granularities are classified as a resource granularity group. Then, an index of the frequency domain granularity in a (j)-th resource granularity group satisfies $l_{i,j} = (j - 1) \times K_1 + i$, where i = 1,2, ... , $K_1$, $j = 1,2, ..., \lceil N_1/K_1 \rceil$, and $\lceil \cdot \rceil$ represents a rounding-up operation. That is, the frequency domain granularities indexed as 1, 2, ... , $K_1$ are classified as a resource granularity group, the frequency domain granularities indexed as $K_1 + 1$, $K_1 + 2$, ... , $2K_1$ are classified as a resource granularity group, ......, and the frequency domain granularities indexed as $N_1 - K_1 + 1$, $N_1 - K_1 + 2$, ... , $N_1$ are classified as a resource granularity group, where there are $\lceil N_1/K_1 \rceil$ resource granularity groups in total; and $\lceil N_1/K_1 \rceil$ pieces of first channel state information are obtained correspondingly.

In some other embodiments, dividing the plurality of resource granularities of the initial channel state information in the target dimension into the plurality of resource granularity groups, so as to obtain the plurality pieces of first channel state information in S111, includes the following.

Every regular-spacingly arranged grouping granularity number of resource granularities among the plurality of resource granularities of the initial channel state information in the target dimension are classified as a resource granularity group according to the grouping granularity number, so as to obtain the plurality pieces of first channel state information. The grouping granularity number characterizes a number of resource granularities in the resource granularity group.

It should be noted that, in the embodiments of the present disclosure, indexes of the plurality of resource granularities of the initial channel state information in the target dimension are numbered in sequence, and the regular-spacingly arranged plurality of resource granularities are a plurality of resource granularities having regular-spaced indexes.

Taking the initial channel state information being a matrix with a size of $N_1 \times N_2 \times L_1 \times C$ and the frequency domain dimension being the target dimension as an example, $N_1$ frequency domain granularities of the initial channel state information are numbered in sequence as 1, 2, ... , $N_1$, and every regular-spacingly arranged $K_1$ frequency domain granularities are classified as a resource granularity group. Then, an index of the frequency domain granularity in a (j)-th resource granularity group satisfies $l_{i,j} = (i - 1) \times \lceil N_1/K_1 \rceil + j$, where i = 1,2, ... , $K_1$, $j = 1,2, ..., \lceil N_1/K_1 \rceil$, and $\lceil \cdot \rceil$ represents a rounding-up operation. That is, the frequency domain granularities with indexes of 1, $\lceil N_1/K_1 \rceil + 1, ..., (K_1 - 1) \times \lceil \frac{N_1}{K} \rceil + 1$ are classified as a resource granularity group, the frequency domain granularities with indexes of 2, $\lceil N_1/K_1 \rceil + 2, ..., (K_1 - 1) \times \lceil \frac{N_1}{K_1} \rceil + 2$ are classified as a resource granularity group, ......, and the frequency domain granularities with indexes of $\lceil N_1/K_1 \rceil, 2\lceil N_1/K_1 \rceil, ..., N_1$ are classified as a resource granularity group, where there are $\lceil N_1/K_1 \rceil$ resource granularity groups in total. A space between the frequency domain granularities in each resource granularity group is $\lceil N_1/K_1 \rceil$, and $\lceil N_1/ K_1 \rceil$ pieces of first channel state information are obtained correspondingly.

In the embodiments of the present disclosure, every regular-spacingly arranged grouping granularity number of resource granularities are classified as a resource granularity group, so that a span between the resource granularities in the resource granularity group is increased, thereby improving the processing performance of the channel state information.

In yet some embodiments, the classifying the plurality of resource granularities of the initial channel state information in the target dimension as the plurality of resource granularity groups, so as to obtain the plurality pieces of first channel state information in S111, includes the following.

A plurality of resource blocks of the initial channel state information are classified as the plurality of resource granularity groups according to a grouping granularity number, so as to obtain the plurality pieces of first channel state information. The grouping granularity number characterizes a number of resource granularities in a resource granularity group, a resource block includes some of the plurality of resource granularities of the initial channel state information in the target dimension, and a sum of numbers of resource granularities included in all resource blocks classified as a resource granularity group is equal to the grouping granularity number.

It should be noted that, in the embodiments of the present disclosure, indexes of the plurality of resource granularities of the initial channel state information in the target dimension are numbered in sequence, and the resource block includes a plurality of resource granularities having continuous indexes.

In the embodiments of the present disclosure, a number of resource granularities in each resource block is not particularly limited. A number of resource blocks classified as a resource granularity group may be two or more. For example, each resource granularity group includes 6 resource granularities. If each resource block includes 3 resource granularities, a number of resource blocks classified as a resource granularity group is 2; and if each resource block includes 2 resource granularities, a number of resource blocks classified as a resource granularity group is 3. The embodiments of the present disclosure do not limit particularly thereto.

The embodiments of the present disclosure do not particularly limit how to classify a plurality of resource blocks as a plurality of resource granularity groups.

In some examples, classifying the plurality of resource blocks in the initial channel state information as the plurality of resource granularity groups according to the grouping granularity number, so as to obtain the plurality pieces of first channel state information, includes: classifying resource granularities of regular-spacingly arranged multiple resource blocks among the plurality of resource blocks in the initial channel state information as a resource granularity group according to the grouping granularity number, so as to obtain the plurality pieces of first channel state information.

It should be noted that in the embodiments of the present disclosure, indexes of the plurality of resource granularities of the initial channel state information in the target dimension are numbered in sequence, and every several continuous resource granularities are classified as a resource block. Indexes of the plurality of resource blocks are also numbered in sequence, and the regular-spacingly arranged resource blocks refer to multiple resource blocks having regular-spaced indexes.

In the embodiments of the present disclosure, the regular-spacingly arranged resource blocks are classified as a resource granularity group, so that a span between the resource granularities in the resource granularity group is increased, thereby capable of improving the processing performance of the channel state information.

In some other examples, classifying the plurality of resource blocks in the initial channel state information as the plurality of resource granularity groups according to the grouping granularity number, so as to obtain the plurality pieces of first channel state information, includes: classifying resource granularities in the plurality of resource blocks as the plurality of resource granularity groups in a head-and-tail stitching manner according to the grouping granularity number, so as to obtain the plurality pieces of first channel state information.

It should be noted that in the embodiments of the present disclosure, indexes of the plurality of resource granularities of the initial channel state information in the target dimension are numbered in sequence, every several continuous resource granularities are classified as a resource block, and the plurality of resource blocks are arranged in sequence as a queue. The classifying the resource granularities in the plurality of resource blocks as the plurality of resource granularity groups in the head-and-tail stitching manner refers to classifying resource granularities in a first resource block at a head of the queue and resource granularities in a first resource block at a tail of the queue as a resource granularity group, and classifying resource granularities in a second resource block at the head of the queue and resource granularities in a second resource block at the tail of the queue as a resource granularity group,......, so as to obtain a plurality of resource granularity groups and then to obtain a plurality pieces of first channel state information.

In the embodiments of the present disclosure, a plurality of resource blocks are classified as a resource granularity group in a head-and-tail stitching manner, so that a span between the resource granularities in the resource granularity group is increased, thereby improving the processing performance of the channel state information.

In yet some embodiments, the classifying the plurality of resource granularities of the initial channel state information in the target dimension as the plurality of resource granularity groups, so as to obtain the plurality pieces of first channel state information in S111, includes the following.

Every grouping granularity number of resource granularities among the plurality of resource granularities of the initial channel state information in the target dimension are classified randomly as a resource granularity group according to the grouping granularity number, so as to obtain the plurality pieces of first channel state information. The grouping granularity number characterizes a number of resource granularities in the resource granularity group.

In the embodiments of the present disclosure, how to randomly classify every grouping granularity number of resource granularities as a resource granularity group is not limited particularly. For example, a plurality of resource granularities may be randomly ranked first, and then classified as a plurality of resource granularity groups in a continuous grouping manner; or, a plurality of resource granularities may be randomly acquired, so as to form a resource granularity group.

In the embodiments of the present disclosure, every grouping granularity number of resource granularities are randomly classified as a resource granularity group, so that the processing performance of the channel state information can be improved. In some examples, classifying randomly every grouping granularity number of resource granularities among the plurality of resource granularities of the initial channel state information in the target dimension as a resource granularity group according to the grouping granularity number, so as to obtain the plurality pieces of first channel state information, includes: randomly ranking the plurality of resource granularities to obtain a to-be-grouped sequence; and classifying every continuous grouping granularity number of resource granularities as a resource granularity group according to the to-be-grouped sequence.

In some scenarios, the number of the plurality of resource granularities of the initial channel state information in the target dimension is not exactly divided by the number of the resource granularities to be classified to a resource granularity group. In this case, a resource granularity may be used for padding, so that numbers of the resource granularities in the respective resource granularity groups are the same.

Based on this, in some embodiments, the classifying the plurality of resource granularities of the initial channel state information in the target dimension as the plurality of resource granularity groups, so as to obtain the plurality pieces of first channel state information in S111, further includes: in a case where the number of the plurality of resource granularities of the initial channel state information in the target dimension is not exactly divided by the grouping granularity number, padding with a resource granularity. The grouping granularity number characterizes a number of resource granularities in the resource granularity group.

It should be noted that after the padding with the resource granularity, a total number of the resource granularities may be exactly divided by the number of the resource granularities to be classified as a resource granularity group. In the embodiments of the present disclosure, how to pad with the resource granularity is not particularly limited.

By the padding with the resource granularity, numbers of the resource granularities in respective resource granularity groups obtained through classification are ensured to be the same, an irregular size of data input to the encoder can be avoided, and then it can be avoided that a size of the data input to the encoder is too small the processing performance of the channel state information, since a remainder of the number of the resource granularities of the initial channel state information in the target dimension divided by the number of the resource granularities to be classified as a resource granularity group is too small.

In some embodiments, the padding with the resource granularity includes: padding with a to-be-padded number of preset resource granularities in a first target resource granularity group according to the to-be-padded number. The to-be-padded number is a number of resource granularities that need to be used for padding.

The first target resource granularity group is a resource granularity group that has a number of resource granularities less than the grouping granularity number before the padding with the resource granularity.

In some examples, the plurality of resource granularity groups are numbered in sequence, and the first target resource granularity group is a (i.e., a first-to-last) resource granularity group with a largest number. In some examples, the plurality of resource granularities are classified to obtain a plurality of resource granularity groups in sequence, and the first target resource granularity group is a last obtained resource granularity group. The embodiments of the present disclosure do not limit thereto.

In the embodiments of the present disclosure, a preset resource granularity is any value that may be used for padding. For example, the preset resource granularity is 0. The embodiments of the present disclosure do not particularly limit the preset resource granularity.

For example, a remainder of a number of the resource granularities of the initial channel state information in the target dimension divided by the grouping granularity number is $L_1$, and the grouping granularity number is $K_1$. When grouping is performed until a last resource granularity group, a number of the resource granularities in the last resource granularity group is $L_1$, a number of the resource granularities that need to be used for padding is $K_1 - L_1$, and then the last resource granularity group is padded with $K_1 - L_1$ zeroes.

In some other embodiments, the padding with the resource granularity includes: replicating a first target resource granularity as a to-be-padded number of first target resource granularities according to the to-be-padded number, and padding with the to-be-padded number of first target resource granularities into a first target resource granularity group. The first target resource granularity is one of the plurality of resource granularities of the initial channel state information in the target dimension, and the to-be-padded number is a number of resource granularities that need to be used for padding.

In the embodiments of the present disclosure, the first target resource granularity is any one of the plurality of resource granularities of the initial channel state information in the target dimension. For example, the plurality of resource granularities are numbered in sequence, and the first target resource granularity may be a first resource granularity, a second resource granularity, or a last resource granularity. The embodiments of the present disclosure do not particularly limit thereto.

In some examples, the first target resource granularity is a last resource granularity of the plurality of resource granularities of the initial channel state information in the target dimension. For example, the first target resource granularity is a last resource granularity $H_{N_1}$, a remainder of a number of the resource granularities of the initial channel state information in the target dimension divided by the grouping granularity number is $L_1$, and the grouping granularity number is $K_1$. When grouping is performed until a last resource granularity group, a number of the resource granularities in the last resource granularity group is $L_1$, a number of the resource granularities that need to be used for padding is $K_1 - L_1$, and then the last resource granularity $H_{N_1}$ is replicated as $K_1 - L_1$ last resource granularities $H_{N_1}$ and $K_1 - L_1$ last resource granularities $H_{N_1}$ are padded into the last resource granularity group.

In yet some embodiments, the padding with the resource granularity includes: replicating a to-be-padded number of resource granularities in a to-be-padded sequence and padding with the to-be-padded number of resource granularities into a first target resource granularity group. The to-be-padded sequence includes the to-be-padded number of resource granularities, and the to-be-padded number is a number of the resource granularities that need to be used for padding.

The embodiments of the present disclosure do not particularly limit the to-be-padded sequence. For example, multiple resource granularities may be randomly selected to form the to-be-padded sequence; or multiple continuous resource granularities in sequence by taking a specific resource granularity as a starting point may form the to-be-padded sequence; or multiple continuous resource granularities in reverse sequence by taking a specific resource granularity as a starting point may form the to-be-padded sequence.

In some examples, the replicating the to-be-padded number of resource granularities in the to-be-padded sequence and padding with the to-be-padded number of resource granularities into a first target resource granularity group includes: forming a to-be-padded sequence with a continuous to-be-padded number of resource granularities in a forward order or a reverse order by taking a second target resource granularity as a starting point; and replicating the resource granularity in the to-be-padded sequence and padding the to-be-padded number of replicated resource granularities into the first target resource granularity group.

In some examples, the plurality of resource granularities are numbered in sequence, and the second target resource granularity is any one of a first resource granularity, a first-to-last resource granularity (i.e., a last resource granularity), or a second-to-last resource granularity of the plurality of resource granularities of the initial channel state information in the target dimension. The embodiments of the present disclosure do not limit the second target resource granularity.

For example, a remainder of the number of the resource granularities of the initial channel state information in the target dimension divided by the grouping granularity number is $L_1$, and the grouping granularity number is $K_1$. When the grouping is performed until a last resource granularity group, a number of the resource granularities in the last resource granularity group is $L_1$, and a number of the resource granularities that need to be used for padding is $K_1 - L_1$. The second target resource granularity is a first resource granularity $H_1$ of the plurality of resource granularities; and the resource granularity $H_1$, a resource granularity $H_2$,......, and a resource granularity $H_{K_1-L_1}$ are taken as the to-be-padded sequence, and the resource granularities in the to-be-padded sequence are replicated and padded into the last resource granularity group.

For another example, a remainder of the number of the resource granularities of the initial channel state information in the target dimension divided by the grouping granularity number is $L_1$, and the grouping granularity number is $K_1$. When grouping is performed until a last resource granularity group, a number of the resource granularities in the last resource granularity group is $L_1$, and a number of the resource granularities that need to be used for padding is $K_1 - L_1$. The second target resource granularity is a last resource granularity $H_{N_1}$ of the plurality of resource granularities, the resource granularity $H_{N_1}$, a resource granularity $H_{N_1-1}$,......, and a resource granularity $H_{N_1-K_1+L_1+1}$ are taken as the to-be-padded sequence, and the resource granularities in the to-be-padded sequence are replicated and padded into the last resource granularity group.

For another example, a remainder of the number of the resource granularities of the initial channel state information in the target dimension divided by the grouping granularity number is $L_1$, and the grouping granularity number is $K_1$. When the grouping is performed until a last resource granularity group, a number of the resource granularities in the last resource granularity group is $L_1$, and a number of the resource granularities that need to be used for padding is $K_1 - L_1$. The second target resource granularity is a second-to-last resource granularity $H_{N_1-1}$ of the plurality of resource granularities. The resource granularity $H_{N_1-1}$, a resource granularity $H_{N_1-2}$,......, and a resource granularity $H_{N_1-K_1+L_1}$ are taken as the to-be-padded sequence. The resource granularities in the to-be-padded sequence are replicated and padded into the last one resource granularity group.

In some embodiments, the padding with the resource granularity includes: performing overlapped padding on the second target resource granularity group according the to-be-padded number. The to-be-padded number is a number of resource granularities that need to be used for padding.

In the embodiments of the present disclosure, the performing overlapped padding on the second target resource granularity group refers to replicating several resource granularities in a previous resource granularity group of the second target resource granularity group as the resource granularities in the second target resource granularity group.

In the embodiments of the present disclosure, the plurality of resource granularities of the initial channel state information in the target dimension may be grouped first to obtain at least one resource granularity group, and then overlapped padding is performed on the second target resource granularity group, so that numbers of the resource granularities in respective resource granularity groups that are finally obtained are the same; or, while the plurality of resource granularities of the initial channel state information in the target dimension are grouped, overlapped padding is performed on the second target resource granularity group to obtain a plurality of resource granularity groups. The embodiments of the present disclosure do not particularly limit thereto.

In the embodiments of the present disclosure, overlapped padding may be performed on one or more second target resource granularity groups. The embodiments of the present disclosure do not particularly limit thereto. In the embodiments of the present disclosure, overlapped padding may be performed on a plurality of continuous resource granularity groups, or overlapped padding may be performed on a plurality of non-completely continuous resource granularity groups. The embodiments of the present disclosure do not particularly limit thereto.

The embodiments of the present disclosure do not particularly limit how to perform overlapped padding on the second target resource granularity group.

In some embodiments, the padding with the resource granularity includes: determining an overlapped padding position and a size of a overlapped resource of at least one second target resource granularity group according to a to-be-padded number; and performing overlapped padding on respective second target resource granularity groups according to overlapped padding positions and sizes of overlapped resources of the respective second target resource granularity groups.

The the overlapped padding position characterizes a position of the second target resource granularity group, and the size of the overlapped resource characterizes a number of resource granularities that need to be used for padding in the second target resource granularity group.

In some examples, the determining the overlapped padding position and the size of the overlapped resource of the at least one second target resource granularity group according to the to-be-padded number, includes: determining a continuous first number of second target resource granularity groups according to the to-be-padded number. The size of the overlapped resource of each of the second target resource granularity groups is a second number, and a product of the first number and the second number is equal to the to-be-padded number.

The performing overlapped padding on the respective second target resource granularity groups according to the overlapped padding positions and the sizes of the overlapped resources of the respective second target resource granularity groups, includes: replicating a second number of resource granularities at a tail of a previous resource granularity group of each second target resource granularity group, as an initial second number of resource granularities of the each second target resource granularity group.

In the embodiments of the present disclosure, the continuous first number of second target resource granularity groups may be any first number of continuous resource granularity groups among the plurality of resource granularity groups. The embodiments of the present disclosure do not particularly limit thereto.

In the embodiments of the present disclosure, the second number may be any one of 1, 2,......, the to-be-padded number. The embodiments of the present disclosure do not particularly limit thereto.

In some examples, the first number is equal to the to-be-padded number, and the second number is 1. The replicating the second number of resource granularities at the tail of the previous resource granularity group of the each second target resource granularity group, as the initial second number of resource granularities of the each second target resource granularity group includes: replicating a last resource granularity in the previous resource granularity group of the each second target resource granularity group, as a first resource granularity of the each second target resource granularity group.

For example, the initial channel state information is a matrix with a size of $N_1 \times N_2 \times L_1 \times C$, the target dimension is the frequency domain dimension, and $N_1$ frequency domain granularities of the initial channel state information are numbered in sequence as $1, 2, ... , N_1$. Each resource granularity group includes $K_1$ frequency domain granularities, and the number of the frequency domain granularities that need to be used for padding is $K_1 - L_1$. The dividing for the resource granularity groups are performed according to a grouping manner of dividing every $K_1$ continuous frequency domain granularities into a resource granularity group, and the continuous first number of second target resource granularity groups are $K_1 - L_1$ continuous resource granularity groups starting with the second resource granularity group. Then, the frequency domain granularities indexed as $1, 2, ... , K_1$ are classified as a resource granularity group, the frequency domain granularities indexed as $K_1, K_1 + 1, K_1 + 2, ..., 2K_1 - 1$ are classified as a resource granularity group, the frequency domain granularities indexed as $2K_1 - 1, 2Ki_1, 2K_1 + 1, 2K_1 + 2, ..., 3K_1 - 2$ are classified as a resource granularity group,......, and the frequency domain granularities indexed as $N_1 - K_1 + 1, N_1 - K_1 + 2, ... , N_1$ are classified as a resource granularity group. In some other examples, the determining the overlapped padding position and the size of the overlapped resource of the at least one second target resource granularity group according to the to-be-padded number includes: determining a second target resource granularity group, where a size of an overlapped resource of the second target resource granularity group is the to-be-padded number.

The performing the overlapped padding on the each second target resource granularity group according to the overlapped padding position and the size of the overlapped resource of the each second target resource granularity group includes: replicating the to-be-padded number of resource granularities at a tail of a previous resource granularity group of the second target resource granularity group as an initial to-be-padded number of resource granularities of the second target resource granularity group.

For example, the initial channel state information is a matrix with a size of $N_1 \times N_2 \times L_1 \times C$, the target dimension is the frequency domain dimension, and $N_1$ frequency domain granularities of the initial channel state information are numbered in sequence as $1, 2, ..., N_1$. Each resource granularity group includes $K_1$ frequency domain granularities, and a number of the frequency domain granularities that need to be padded is $K_1 - L_1$. The dividing for the resource granularity groups are performed according to a grouping manner of dividing every $K_1$ continuous frequency domain granularities into a resource granularity group, and the second target resource granularity group is a second resource granularity group. Then, the frequency domain granularities indexed as $1, 2, ..., K_1 - L_1 + 1, ... , K_1$ are classified as a resource granularity group, the frequency domain granularities indexed as $K_1 - L_1 + 1, ..., K_1, ..., 2K_1 - L_1$ are classified as a resource granularity group, ......, and the frequency domain granularities indexed as $N_1 - K_1 + 1, N_1 - K_1 + 2, ... , N_1$ are classified as a resource granularity group.

In yet some examples, the determining the overlapped padding position and the size of the overlapped resource of the at least one second target resource granularity group according to the to-be-padded number, includes: determining a plurality of second target resource granularity groups and sizes of overlapped resources of respective second target resource granularity groups, where sizes of overlapped resources of at least two second target resource granularity groups are different from each other.

In the embodiments of the present disclosure, in a case where the sizes of the overlapped resources of the at least two second target resource granularity groups are different from each other, the plurality of second target resource granularities may be a plurality of continuous resource granularity groups or may be a plurality of non-completely continuous resource granularity groups. The embodiments of the present disclosure do not particularly limit thereto. The size of the overlapped resource of the respective second target resource granularity groups may be any value, as long as a sum of the sizes of the overlapped resources of all the second target resource granularity groups is equal to the to-be-padded number. The embodiments of the present disclosure do not particularly limit thereto.

For example, the initial channel state information is a matrix with a size of $N_1 \times N_2 \times L_1 \times C$, the target dimension is the frequency domain dimension, and $N_1$ frequency domain granularities of the initial channel state information are numbered in sequence as $1,2,..., N_1$. Each resource granularity group includes $K_1$ frequency domain granularities, and a number of the frequency domain granularities that need to be used for padding is $K_1 - L_1$. The dividing for the resource granularity groups are performed according to a grouping manner of dividing every $K_1$ continuous frequency domain granularities into a resource granularity group, and the second target resource granularity group is $K_1 - L_1$ continuous resource granularity groups starting with the second resource granularity group. Then the frequency domain granularities indexed as $1,2, ..., K_1$ are classified as a resource granularity group, the frequency domain granularities indexed as $K_1, K_1 + 1, K_1 + 2, ..., 2K_1 - 2, 2K_1 - 1$ are classified as a resource granularity group, the frequency domain granularities indexed as $2K_1 -2, 2K_1 - 1, 2K_1, 2K_1 + 1, ..., 3K_1 - 3$ are classified as a resource granularity group, the frequency domain granularities indexed as $3K_1 - 5, 3K_1 - 4, 3K_1 - 3, 3K_1 - 2, ..., 4K_1 - 6$ are classified as a resource granularity group, ......, and the frequency domain granularities indexed as $N_1 - K_1 + 1, N_1 - K_1 + 2, ... , N_1$ are classified as a resource granularity group. It can be seen from this that, the sizes of the overlapped resources of the at least two second target resource granularity groups are different from each other.

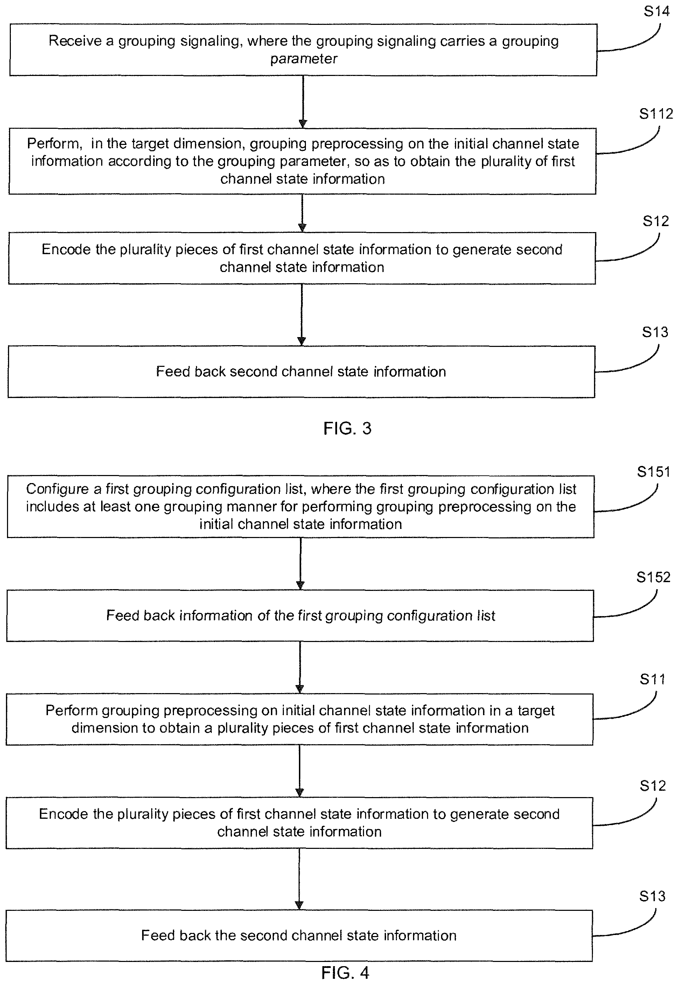

In some embodiments, referring to FIG. 3, the processing method further includes S14 before S11.

In S14, grouping signaling is received. The grouping signaling carries a grouping parameter.

Based on this, referring to FIG. 3, S11 includes S112.

In S112, grouping preprocessing is performed on the initial channel state information in the target dimension according to the grouping parameter, so as to obtain the plurality pieces of first channel state information.

In some embodiments, the grouping parameter includes at least one of the following parameters:

a grouping identification bit, configured to identify whether grouping and preprocessing needs to be performed on the initial channel state information;

an exact division identification bit, configured to identify whether a number of resource granularities of the initial channel state information in the target dimension is exactly divided by the grouping granularity number;

grouping manner information, configured to indicate a grouping manner for performing grouping preprocessing on the initial channel state information;

a grouping granularity number, configured to indicate a number of resource granularities in the resource granularity group obtained by performing grouping the initial channel state information; and

resource granularity padding information, configured to indicate an overlapped padding position and a size of the overlapped resource of the second target resource granularity group when overlapped padding is performed.

In some embodiments, as shown in FIG. 4, the processing method further includes S151 and S152.

In S151, a first grouping configuration list is configured. The first grouping configuration list includes at least one grouping manner for performing grouping preprocessing on the initial channel state information.

In S152, information of the first grouping configuration list is fed back.

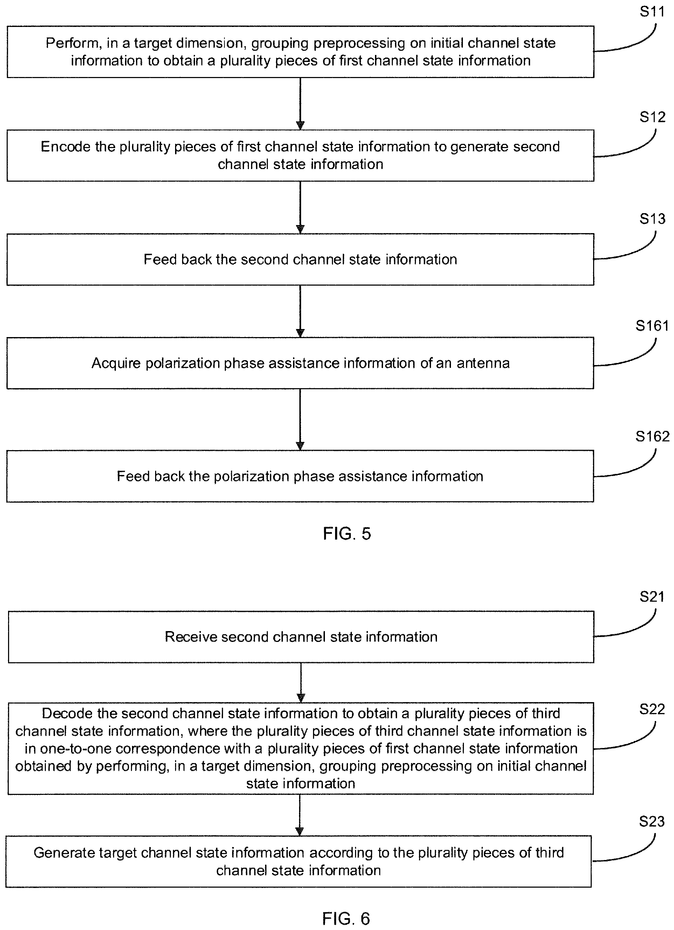

In some embodiments, as shown in FIG. 5, the processing method further includes S161 and S162.

In S161, polarization phase assistance information of an antenna is acquired.

In S162, the polarization phase assistance information is fed back.

In some embodiments, the processing method further includes: sending a grouping index. The grouping index characterizes a correspondence relationship between the plurality pieces of first channel state information and the plurality of resource granularities in the initial channel state information.

In some embodiments, when grouping preprocessing is performed serially on the initial channel state information in sequence and then the first channel state information is encoded and fed back in sequence, or when grouping preprocessing is performed in parallel on the initial channel state information and then the first channel state information is encoded and fed back in parallel, the grouping index is sent to the base station, so that the base station may restore the initial channel state information according to the grouping index.

In some embodiments, when grouping preprocessing is performed serially on the initial channel state information in sequence and then the first channel state information is encoded and fed back in sequence, the grouping index is not sent to the base station; and when grouping preprocessing is performed on the initial channel state information in parallel and then the first channel state information is encoded and fed back in parallel, the grouping index is sent to the base station.

In some embodiments, when grouping preprocessing is performed serially on the initial channel state information in sequence and then the first channel state information is encoded and fed back in sequence, it can be selected that the grouping index is not sent to the base station or the grouping index is sent to the base station; and when grouping preprocessing is performed on the initial channel state information in parallel and then the first channel state information is encoded and fed back in parallel, the grouping index is sent to the base station.

In a second aspect, referring to FIG. 6, the embodiments of the present disclosure provide another channel state information processing method, where the processing method includes S21 to S23.

In S21, second channel state information is received.

In S22, the second channel state information is decoded to obtain a plurality pieces of third channel state information. The plurality pieces of third channel state information are in one-to-one correspondence with a plurality pieces of first channel state information obtained by performing grouping preprocessing on initial channel state information in a target dimension.

In S23, target channel state information is generated according to the plurality pieces of third channel state information.

In the embodiments of the present disclosure, a base station may receive and decode the second channel state information to obtain the target channel state information as estimation of the initial channel state information, thereby completing the feedback of the channel state information.

The base station is not particularly limited in the embodiments of the present disclosure. For example, the base station may be any one of a macro base station, a micro base station, a home base station, and a pico base station.

In S23, the base station may generate the target channel state information from the plurality pieces of third channel state information according to the grouping manner for performing, by the terminal, grouping preprocessing on the initial channel state information in the target dimension. A size of obtained target channel state information is the same as a size of the initial channel state information, and the target channel state information is approximation or estimation of the initial channel state information.

A size of channel state information processed by an encoder and a decoder is smaller than a size of the initial channel state information, thereby capable of reducing an amount of data input to the encoder and the decoder, which is beneficial to simplifying an encoder model and a decoder model and realizing reduction of an overhead of an operation at a terminal and the feedback of the channel state information on a premise of ensuring accuracy of the feedback of the channel state information.

In some embodiments, generating the target channel state information according to the plurality pieces of third channel state information in S23 includes: obtaining the target channel state information according to the plurality pieces of third channel state information and the grouping manner for performing grouping preprocessing on the initial channel state information in the target dimension.

The embodiments of the present disclosure do not particularly limit how to obtain the target channel state information according to the plurality pieces of third channel state information and the grouping manner for performing grouping preprocessing on the initial channel state information in the target dimension.

In some embodiments, a step of obtaining the target channel state information according to the plurality pieces of third channel state information and the grouping manner for performing grouping preprocessing on the initial channel state information in the target dimension includes: combining the plurality pieces of third channel state information in sequence in the target dimension to obtain the target channel state information. The plurality pieces of first channel state information are obtained by dividing every continuous grouping granularity number of resource granularities among the resource granularities of the initial channel state information in the target dimension into a resource granularity group.

In some examples, the terminal adopts the grouping manner for dividing every continuous grouping granularity number of resource granularities into a resource granularity group, encodes the first channel state information in sequence and feeds back encoded first channel state information; and the base station combines the plurality of third channel information in sequence, so that the target channel state information of the same size as the initial channel state information may be obtained.

In some other embodiments, a step of obtaining the target channel state information according to the plurality pieces of third channel state information and the grouping manner for performing grouping preprocessing on the initial channel state information in the target dimension includes: determining a correspondence relationship between the resource granularity in respective third channel state information and the resource granularity in the initial channel state information according to the grouping manner for performing grouping preprocessing on the initial channel state information in the target dimension; and combining resource granularities in the plurality pieces of third channel state information according to the correspondence relationship between the resource granularity in respective third channel state information and the resource granularity in the initial channel state information to obtain the target channel state information.

In some examples, the correspondence relationship between the resource granularity in the third channel state information and the resource granularity in the initial channel state information includes: the resource granularity in the third channel state information corresponding to the regular-spacingly arranged grouping granularity number of resource granularities in the initial channel state information. The plurality pieces of first channel state information are obtained by dividing every regular-spacingly arranged grouping granularity number of resource granularities in the initial channel state information into a resource granularity group.

In some other examples, the correspondence relationship between the resource granularity in the third channel state information and the resource granularity in the initial channel state information includes: the resource granularity in the third channel state information corresponding to some of the plurality of resource blocks in the initial channel state information. The plurality pieces of first channel state information are obtained by dividing the plurality of resource blocks in the initial channel state information into the plurality of resource granularity groups, a resource block includes multiple resource granularities, and a sum of numbers of the resource granularities included in all resource blocks classified as a resource granularity group is equal to the grouping granularity number.

In some embodiments, the resource granularity in the third channel state information corresponding to some of the plurality of resource blocks in the initial channel state information, includes: the resource granularities in the third channel state information corresponding to the resource granularities in the regular-spacingly arranged multiple resource blocks among the plurality of resource blocks in the initial channel state information. The plurality pieces of first channel state information are obtained by dividing the resource granularities in every regular-spacingly arranged multiple resource blocks among the plurality of resource blocks in the initial channel state information into a resource granularity group.

In some embodiments, the resource granularity in the third channel state information corresponding to some of the plurality of resource blocks in the initial channel state information, includes: the resource granularities in the third channel state information corresponding to the resource granularities in the multiple resource blocks in a head-and-tail stitching manner among the plurality of resource blocks in the initial channel state information. The plurality pieces of first channel state information are obtained by dividing the resource granularities in the plurality of resource blocks in the initial channel state information into the plurality of resource granularity groups in the head-and-tail stitching manner.

In yet some examples, the correspondence relationship between the resource granularity in the third channel state information and the resource granularity in the initial channel state information includes: the resource granularities in the third channel state information corresponding to the grouping granularity number of resource granularities randomly arranged in the initial channel state information. The plurality pieces of first channel state information are obtained by randomly dividing every grouping granularity number of resource granularities in the initial channel state information into a resource granularity group.

In some embodiments, the step of obtaining the target channel state information according to the plurality pieces of third channel state information and the grouping manner for performing grouping preprocessing on the initial channel state information in the target dimension, further includes: in a case where a number of the resource granularities of the initial channel state information in the target dimension is not exactly divided by the grouping granularity number, removing a padded number of redundant resource granularities in at least one third channel state information. The redundant resource granularities correspond to the resource granularities padded in the at least one first channel state information.

It should be noted that, in the embodiments of the present disclosure, a padded number of the number of the redundant resource granularities that is characterized at a base station side and needs to be removed is the same as a to-be-padded number of the number of the resource granularities that is characterized at a terminal side and needs to used for padding.

In some embodiments, removing the redundant resource granularities in the at least one third channel state information includes: removing the padded number of resource granularities at a tail in the third channel state information corresponding to the first target resource granularity group. The first target resource granularity group is a resource granularity group padded with the padded number of preset resource granularities.

In some other embodiments, removing the redundant resource granularities in the at least one third channel state information includes: removing the padded number of resource granularities at a tail in the third channel state information corresponding to the first target resource granularity group. The first target resource granularity group is a resource granularity group in which the first target resource granularity is replicated by the padded number times and the padded number of first target resource granularities are used for padding, and the first target resource granularity is one of the plurality of resource granularities of the initial channel state information.

In some examples, the first target resource granularity is a first-to-last resource granularity in the initial channel state information.

In yet some embodiments, removing the redundant resource granularities in the at least one third channel state information includes: removing the padded number of resource granularities at a tail in the third channel state information corresponding to the first target resource granularity group. The first target resource granularity group is a resource granularity group in which the resource granularities in the to-be-padded sequence are replicated and used for padding, and the to-be-padded sequence includes the padded number of resource granularities of the initial channel state information.

In some examples, the to-be-padded sequence is formed with the padded number of resource granularities, that are continuous in a forward order or a reverse order starting with the second target resource granularity, of the initial channel state information in the target dimension.

In some examples, the second target resource granularity is any one of a first resource granularity, a first-to-last resource granularity, and a second-to-last resource granularity of the initial channel state information in the target dimension.

In yet some embodiments, removing the redundant resource granularities in the at least one third channel state information includes: removing the redundant resource granularity in the third channel state information corresponding to the at least one second target resource granularity group according to the overlapped padding position and the size of the overlapped padding resource. The second target resource granularity group is a resource granularity group on which overlapped padding is performed, the overlapped padding position characterizes a position of the second target resource granularity group, and the size of the overlapped resource characterizes a number of resource granularities padded in the second target resource granularity group.

In some examples, the removing the redundant resource granularity in the third channel state information corresponding to the at least one second target resource granularity group according to the overlapped padding position and the size of the overlapped padding resource includes: determining third channel state information corresponding to a first number of second target resource granularity groups; and removing an initial second number of resource granularities in respective third channel state information corresponding to the second target resource granularity group.

The first number of second target resource granularity groups are continuous, the initial second number of resource granularities of the respective second target resource granularity groups are replications of the second number of resource granularity groups at a tail in a previous resource granularity group, respectively, and a product of the first number and the second number is equal to the padded number.

In some examples, the first number is equal to the padded number and the second number is 1.

In some examples, the removing the redundant resource granularity in the third channel state information corresponding to the at least one second target resource granularity group according to the overlapped padding position and the size of the overlapped padding resource includes: determining third channel state information corresponding to a second target resource granularity group, where the second target resource granularity group is padded with the padded number of resource granularities; and removing an initial padded number of resource granularities in the third channel state information corresponding to the second target resource granularity group.

In some examples, the removing the redundant resource granularity in the third channel state information corresponding to the at least one second target resource granularity group according to the overlapped padding position and the size of the overlapped padding resource includes: determining third channel state information corresponding to a plurality of second target resource granularity groups, where sizes of overlapped resources of at least two second target resource granularity groups are different from each other; and removing the redundant resource granularity in the third channel state information corresponding to respective second target resource granularity groups according to sizes of overlapped resources of the respective second target resource granularity groups.

In some embodiments, a step of obtaining the target channel state information according to the plurality pieces of third channel state information and the grouping manner for performing grouping preprocessing on the initial channel state information in the target dimension includes: combining the plurality pieces of third channel state information according to a grouping index to obtain the target channel state information.

The grouping index characterizes a correspondence relationship between a plurality pieces of first channel state information and a plurality of resource granularities in the initial channel state information. In the embodiments of the present disclosure, the grouping index may be determined by a base station when the base station determines the grouping manner and sends the grouping manner to a terminal; or the grouping index may be determined by the terminal when the terminal performs grouping preprocessing on the initial channel state information and sent to the base station. The embodiments of the present disclosure do not particularly limit thereto.

In some embodiments, the target dimension includes at least one of a frequency domain dimension, a space domain dimension, a layer dimension, and a time domain dimension.

In some embodiments, in a case where the target dimension includes a frequency domain dimension, the resource granularity includes a frequency domain granularity; in a case where the target dimension includes a space domain dimension, the resource granularity includes an antenna port or a polarization direction; in a case where the target dimension includes a layer dimension, the resource granularity includes a layer granularity; and in a case where the target dimension includes a time domain dimension, the resource granularity includes a time domain granularity.

In some embodiments, before receiving the second channel state information in S21, the processing method further includes: sending group signaling, where the group signaling is configured to indicate the terminal to perform group preprocessing on the initial channel state information in the target dimension.

In some embodiments, the grouping signaling carries a grouping parameter, and the grouping parameter includes at least one of the following parameters:

a grouping identification bit, configured to identify whether the group preprocessing needs to be performed on the initial channel state information;

an exact division identification bit, configured to identify whether the number of the resource granularities of the initial channel state information in the target dimension is exactly divided by the grouping granularity number;

grouping manner information, configured to indicate a grouping manner for performing grouping preprocessing on the initial channel state information;

a grouping granularity number, configured to indicate a number of resource granularities in a resource granularity group obtained by performing grouping on the initial channel state information; and

resource granularity padding information, configured to indicate an overlapped padding position and a size of the overlapped resource of the second target resource granularity group when overlapped padding is performed.

In some embodiments, before receiving the second channel state information in S21, the processing method further includes:

configuring a second grouping configuration list, where the second grouping configuration list includes at least one grouping manner for performing grouping preprocessing on the initial channel state information; and

sending information of the second grouping configuration list.

In some embodiments, the processing method further includes:

receiving the information of the first grouping configuration list; and

generating grouping signaling according to the information of the first grouping configuration list.

In some embodiments, a step of generating the target channel state information according to the plurality pieces of third channel state information includes: receiving polarization phase assistance information of an antenna; and generating the target channel state information according to the polarization phase assistance information and the plurality pieces of third channel state information.

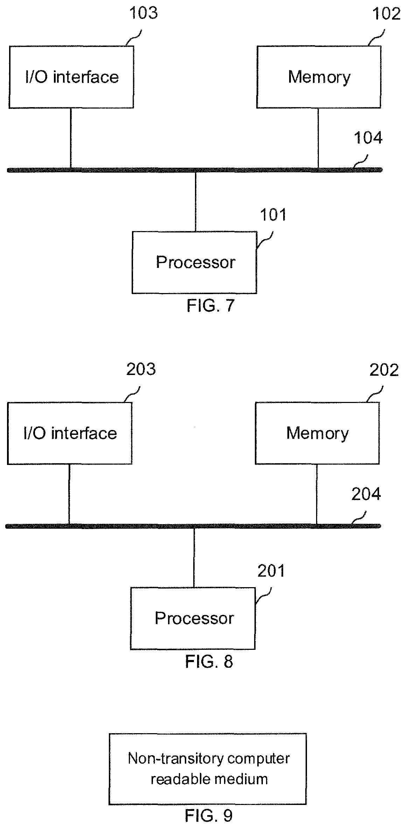

In a third aspect, referring to FIG. 7, some embodiments of the present disclosure provide a terminal, and the terminal includes:

at least one processor 101;

a memory 102, with one or more programs stored thereon, where the one or more programs, upon being executed by the at least one processors 101, causes the at least one processor 101 to implement any one channel state information processing method of the first aspect in the embodiments of the present disclosure; and

at least one I/O interface 103, connected between the at least one processor 101 and the memory 102, and configured to implement information interaction between the processor 101 and the memory 102.

The processor 101 is a means with a data processing capability, including but not limited to a central processing unit (CPU). The memory 102 is a means with a data storage capability, including but not limited to a random access memory (RAM), a read-only memory (ROM), an electrically erasable programmable read-only memory (EEPROM), or a flash memory (FLASH). The RAM includes, for example, a synchronous dynamic random access memory (SDRAM) or DDR (DDR SDRAM). The I/O interface (reading and writing interface) 103 is connected between the processor 101 and the memory 102, is capable of implementing information interaction between the processor 101 and the memory 102, and includes but is not limited to a data bus.

In some embodiments, the processor 101, the memory 102, and the I/O interface 103 are connected to each other via a bus 104, and are further connected to other components of a computing device.

In a fourth aspect, referring to FIG. 8, some embodiments of the present disclosure provide a base station, and the base station includes:

one or more processors 201;

a memory 202, with one or more programs stored thereon, where the one or more programs, upon being executed by the one or more processors 201, causes the one or more processors 201 to implement the channel state information processing method described in the second aspect in the embodiments of the present disclosure; and

one or more I/O interfaces 203, connected between the processor 201 and the memory 202, and configured to implement information interaction between the processor 201 and the memory 202.

The processor 201 is a means with a data processing capability, including but not limited to a central processing unit. The memory 202 is a means with a data storage capability, including but not limited to a random access memory (such as SDRAM or DDR), a read-only memory, an electrically erasable programmable read-only memory, or a flash memory. The I/O interface (reading and writing) 203 is connected between the processor 201 and the memory 202, is capable of implementing information interaction between the processor 201 and the memory 202, and includes but not limited to a data bus.

In some embodiments, the processor 201, the memory 202, and the I/O interface 203 are connected to each other via a bus 204, and are further connected to other components of a computing device.

In a fifth aspect, referring to FIG. 9, some embodiments of the present disclosure provide a non-transitory computer readable medium with a computer program stored thereon, where the computer program, upon being executed by a processor, implements at least one of the following methods: the channel state information processing methods described in the first aspect of the embodiments of the present disclosure; and the channel state information processing methods described in the second aspect of the embodiments of the present disclosure.

In order to make those skilled in the art to understand the technical solutions provided by the embodiments of the present disclosure more clearly, the technical solutions provided by the embodiments of the present disclosure are described in detail below through embodiment 1 to embodiment 21.

Embodiment 1

Embodiment 1 is used to illustrate a form of channel state information.

A terminal obtains original channel information H by receiving a reference signal, such as a channel state information reference signal. The initial channel state information H is generally a complex matrix of $N_t \times N_r$. $N_t$ and $N_r$ are a number of transmitting antennas of a base station and a number of receiving antennas of a terminal, respectively. The antennas in this embodiment may be logical antennas or may be various types of physical antennas. The initial channel state information H may be time domain channel information $H_t$ formed by complex matrix units, or may be frequency domain channel information $H_f$ formed by complex matrix units.

In an embodiment, the time domain channel information $H_t$ is a complex matrix of $N_t \times N_s$, where $N_t$ is a number of antennas and $N_s$ is a number of time domain sampling points. In an antenna dimension, the number of antennas $N_t$ is $N_{tx} \times N_{rx}$, where $N_{tx}$ is a number of transmitting antennas, and $N_{rx}$ is a number of receiving antennas. The number of antennas $N_t$ may also be $N_{tx} \times R$, where $N_{tx}$ is a number of transmitting antennas, and R is a channel rank or a number of data streams. Since a time domain channel is sparse, a smaller channel value may be discarded in a time domain sampling point dimension, that is, time domain points are truncated, and at this time, a size of the time domain channel information $H_t$ is $N_t \times N_S'$, and $N_S' < N_S$. The antenna dimension $N_t$ may be not only in a first dimension but also in a second dimension, that is, $N_S' \times N_t$. According to different requirements, the antenna dimension may also be decomposed into the above two-dimensional representation.

In an embodiment, the frequency domain channel information $H_f$ is a complex matrix of $N_t \times N_f$, where $N_t$ is a number of antennas, and $H_f$ is a frequency domain granularity. The frequency domain granularity may be in a unit of a subcarrier or a physical resource block (PRB) or a subband, where a physical resource block may include multiple subcarriers, such as 6 subcarriers, 12 subcarriers, etc.; and a subband includes multiple physical resource blocks. In an antenna dimension, the number of antennas $N_t$ is $N_{tx} \times N_{rx}$, where $N_{tx}$ is a number of transmitting antennas, and $N_{rx}$ is a number of receiving antennas; and the number of antennas $N_t$ may also be $N_{tx} \times R$, where $N_{tx}$ is a number of transmitting antennas, and R is a channel rank or a number of data streams. Since the frequency domain granularities may be obtained by performing fast Fourier transform on time domain sampling points, the time domain sampling points may be truncated in a frequency domain granularity dimension. At this time, the size of the frequency domain channel information $H_f$ is $N_t \times N_f'$, and $N_f' < N_f$. The antenna dimension $N_t$ may be not only in a first dimension but also in a second dimension, that is, $N_f' \times N_t$. According to different requirements, the antenna dimension may also be decomposed into the above two-dimensional representation.

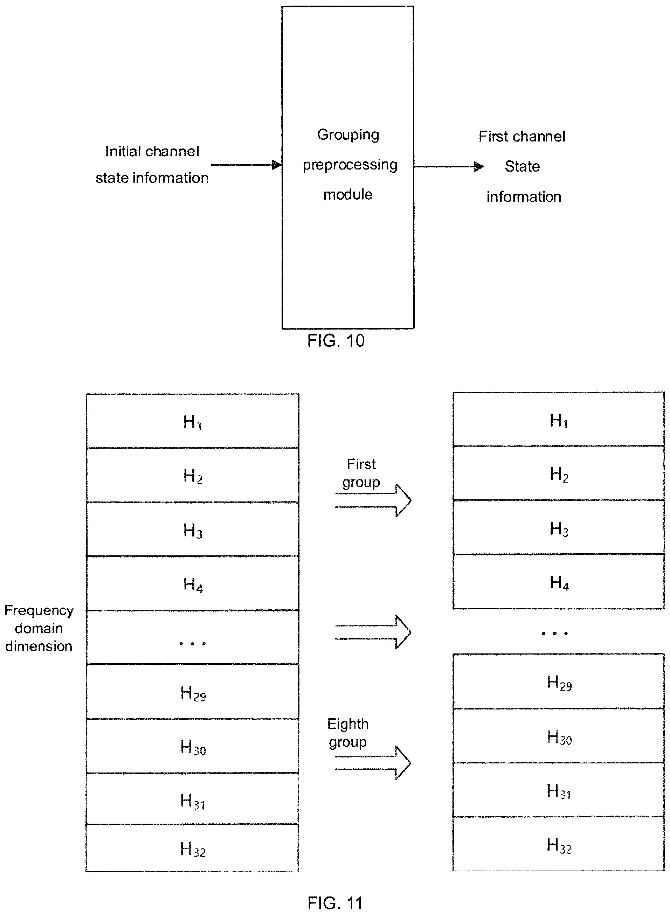

In an embodiment, a process for performing grouping preprocessing on the initial channel state information according to requirements and demands to generate first channel state information, is shown in FIG. 10.

Embodiment 2 to embodiment 6 are used to illustrate a grouping manner for a frequency domain dimension.

In order to reduce network complexity of an encoder, an input size of the encoder needs to be reduced. Accordingly, grouping preprocessing needs to be performed on the initial channel state information in the frequency domain dimension to generate the first channel state information. For example, the initial channel state information is H, H may be a matrix of $Nt \times N_f \times L \times C$, or H may also be a matrix obtained by normalizing obtained channel information. $N_t$ is a number of antenna ports, $N_f$ is a frequency domain granularity, $L$ is a number of layers, and $C$ is a number of channels. The dimension of channels $C$ may also be located in a first dimension and is processed in a similar way as that in a third dimension.

It should be noted that, for the sake of simplification in the embodiments of the present disclosure, a channel of layer $L = 1$ is taken as an example for explanation (that is, a size of a channel matrix is $N_t \times N_f \times C$), and a case of layer $L > 1$ is also applicable. The embodiment 2 to embodiment 6 illustrate grouping preprocessing on the initial channel state information in the frequency domain dimension. The grouping preprocessing manner described in the embodiment 2 to embodiment 6 is also applicable to grouping preprocessing on the initial channel state information in a space domain dimension, a layer dimension and a time domain dimension.

Embodiment 2

In embodiment 2, $N_f$ frequency domain granularities of the initial channel state information in the frequency domain dimension are numbered in sequence as n = 1,2, ..., $N_f$, and every continuous $K$ frequency domain granularities are in a group. Frequency domain granularities in each frequency domain granularity group are indexed as i = 1,2, ...,K. $N_f$ frequency domain granularities are classified as a total of $\lceil N_f/K \rceil$ frequency domain granularity groups (the frequency domain granularity group may be a subcarrier group, a physical resource block group or a subband group), and respective groups are indexed as $j = 1,2,..., \lceil N_f/K \rceil$, where $\lceil \cdot \rceil$ is a round-up operation. Therefore, a set of indexes of the frequency domain granularities of a (j)-th group is integers from $I_j$ =(j-1)$\times$K+1 to j$\times$K, and the (j)-th frequency domain granularity group corresponds to channel information H (:, $I_j$, :), and $j = 1,..., \lceil N_f/K \rceil$. For example, the channel information H is a matrix of 32$\times$32$\times$2, which includes $N_t$ = 32 antennas, $N_f$ = 32 frequency domain subbands, and $C$ = 2 channels (a real part and an imaginary part). Every continuous 4 subbands are classified as a group, so the 32 frequency domain subbands are classified as 8 groups, and the channel information of each group $H_j$ is a matrix of 32$\times$4$\times$2 (j=1,2,...,8). The specific grouping schematic diagram is shown in FIG. 11.

Embodiment 3

Embodiment 3 is intended to further improve the performance by expanding a span of the frequency domain resource in each group.

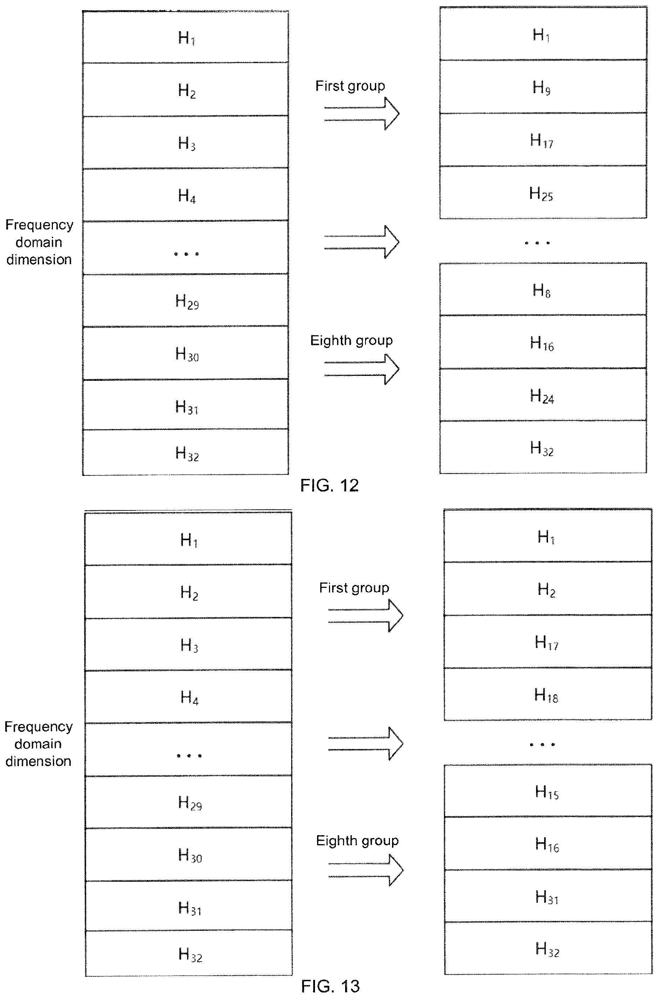

In embodiment 3, $N_f$ frequency domain granularities of the initial channel state information in the frequency domain dimension are numbered in sequence as n = 1,2, ..., $N_f$, and every regular-spaced $K$ frequency domain granularities are in a group. Frequency domain granularities in each frequency domain granularity group are indexed as i = 1,2, ..., $K$, and $N_f$ frequency domain granularities are classified as a total of $\lceil N_f/K \rceil$ frequency domain granularity groups (the frequency domain granularity group may be a subcarrier group, a physical resource block group or a subband group). Respective groups are indexed as $j = 1,2,..., \lceil N_f/K \rceil$, where $\lceil \cdot \rceil$ is a round-up operation. Therefore, a set of indexes of the frequency domain granularities of a (j)-th group is integers of $I_j =\{(i-1)\times \lceil N_f/K \rceil +j\}$, and the (j)-th frequency domain granularity group corresponds to channel information H (:, $I_j$, :), and $j=1,2,..., \lceil N_f/K \rceil$. For example, the channel information H is a matrix of 32$\times$32$\times$2, which includes $N_t$ = 32 antennas, $N_f$ = 32 frequency domain subbands, and $C$ = 2 channels (a real part and an imaginary part). Every regular-spaced 4 subbands are classified as a group, so 32 frequency domain subbands are classified as 8 groups, and the channel information of each group $H_j$ is a matrix of 32$\times$4$\times$2 (j = 1,2,...,8). The specific grouping schematic diagram is shown in FIG. 12.

Embodiment 4

In embodiment 4, $N_f$ frequency domain granularities of the initial channel state information in the frequency domain dimension are numbered in sequence as n = *1,2, ..., $N_f$,* and regular-spaced *K* frequency domain granularities of resource blocks are in a group, that is, several continuous frequency domain granularity blocks and several regular-spaced frequency domain granularity block groups are in a group, and so on The frequency domain granularities in the group is indexes as i = 1,2, ...,*K* , and $N_f$ frequency domain granularities are classified as a total of $\lceil N_f/K \rceil$ frequency domain granularity groups (the frequency domain granularity group may be a subcarrier group, a physical resource block group or a subband group). Respective groups are indexed as $j=1,2,...,\lceil N_f/K \rceil$, where $\lceil \cdot \rceil$ is a round-up operation. Exemplarily, the channel information H is a matrix of $32\times32\times2$, which includes $N_t$ = 32 antennas, $N_f$=32 frequency domain subbands, and *C* = 2 channels (a real part and an imaginary part). Every regular-spaced 4 subbands of the resource blocks are classified as a group, so the 32 frequency domain subbands are classified as 8 groups, and the channel information of each group $H_j$ is a matrix of $32\times4\times2$ (j = 1,2,...,8). Taking the first two groups as an example, the frequency domain granularities thereof are indexes as {1, 2, 17, 18} and {3, 4, 19, 20}, and the specific grouping schematic diagram is shown in FIG. 13.

Embodiment 5

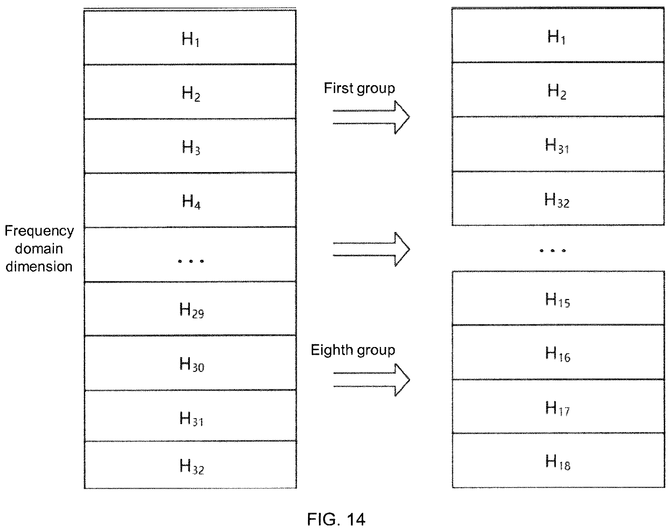

In embodiment 5, $N_f$ frequency domain granularities of the initial channel state information in the frequency domain dimension are numbered in sequence as n = 1,2, ... , $N_f$, and *K* frequency domain granularities of a head resource block and a tail resource block are stitched into a group, that is, several continuous frequency domain granularity blocks at a front and several frequency domain granularity blocks at an end are classified as a group, and such operation is cycled in this way. The frequency domain granularities in the group are indexed as i = 1,2, ..., *K,* and $N_f$ frequency domain granularities are classified as a total of $\lceil N_f/K \rceil$ frequency domain granularity groups (the frequency domain granularity group may be a subcarrier group, a physical resource block group or a subband group). Respective groups are indexed as $j=1,2,...,\lceil N_f/K \rceil$, where $\lceil \cdot \rceil$ is a round-up operation. Exemplarily, the channel information H is a matrix of $32\times32\times2$, which includes $N_t$ = 32 antennas, $N_f$=32 frequency domain subbands, and *C* = 2 channels (a real part and an imaginary part). 4 subbands at a head and a tail are classified as a group, and so on, so 32 frequency domain subbands are classified as 8 groups. The channel information of each group $H_j$ is a matrix of $32\times4\times2$ (j = 1,2,...,8). Taking the first two groups as an example, the frequency domain granularities are indexed as {1, 2, 31, 32} and {3, 4, 29, 30}. The specific grouping schematic diagram is shown in FIG. 14.

Embodiment 6

In embodiment 6, $N_f$ frequency domain granularities of the initial channel state information in the frequency domain dimension are numbered in sequence as n = 1,2, ..., $N_f$, and irregular-spaced *K* frequency domain granularities are in a group, that is, $N_f$ frequency domain granularities are randomly disturbed and reordered. The frequency domain granularities in each frequency domain granularity group are indexed as i = 1,2, ..., *K,* and $N_f$ frequency domain granularities are classified as a total of $\lceil N_f/K \rceil$ frequency domain granularity groups (the frequency domain granularity group may be a subcarrier group, a physical resource block group or a subband group), and respective groups are indexed as $j=1,2,...,\lceil N_f/K \rceil$, where $\lceil \cdot \rceil$ is a round-up operation. Therefore, a set of indexes of the frequency domain granularities in a (j)-th group are integers from $I_j = (j-1) \times K + 1$ to j $\times$ K, and the (j)-th frequency domain granularity group corresponds to channel information $H(:,I_j, :)$, and $j=1,2,...,\lceil N_f/K \rceil$. For example, the channel information H is a matrix of 32x32x2, which includes $N_t$ = 32 antennas, $N_f$=32 frequency domain subbands, and *C* = 2 channels (a real part and an imaginary part). The 32 frequency domain subbands in the frequency domain dimension are randomly disturbed and reordered. Every continuous 4 subbands are classified as a group, so the 32 frequency domain subbands are classified as 8 groups, and the channel information of each group $H_j$ is a matrix of 32x4x2 (j = 1,2,...,8).

Embodiment 7 to embodiment 12 are used to illustrate a solution that the exact division is not performed on the grouping.

$N_f$ frequency domain granularities of the initial channel state information in the frequency domain dimension are numbered in sequence as n = 1,2, ... , $N_f$. After grouping is performed according to the above embodiments, there may be a case where the exact division is not performed by a grouping size, that is, there is a remainder when a total number of frequency domain resources is divided by a number of frequency domain resources in each group. This makes a size of input data to an encoder irregular, thereby resulting in a size of a group to be too small, affecting performance or failing to complete encoding of the encoder. At this time, the frequency domain granularity needs to be supplemented to form the exact division by the grouping size.

Embodiment 7

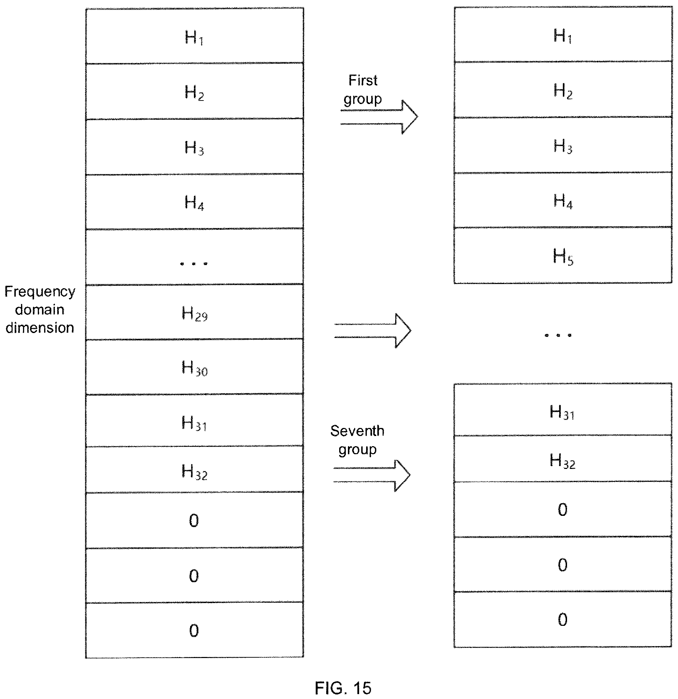

In embodiment 7, when grouping is performed on the frequency domain granularities until a last group, a number of frequency domain granularities $L$ in the last group is smaller than a number of frequency domain granularities of every other group $K$, i.e., $L < K$ , and $K$ - L groups of 0 are supplemented in the frequency domain granularity dimension of the channel information for padding, so that the channel information satisfies an exact division requirement of grouping. For example, the channel information H is a matrix of 32x32x2, which includes $N_t$ = 32 antennas, $N_f$ =32 frequency domain subbands, and $C$ = 2 channels (a real part and an imaginary part). Every continuous 5 subbands are classified as a group, so 32 frequency domain subbands are classified as 7 groups. However, in the seventh group, there is only channel information of two subbands, and channel information of three subbands is missing. Therefore, 0 is supplemented to the channel information of the subbands with indexes 33-35 to make the channel information $H_j$ of each subband group is a matrix of 32x5x2 (j = 1,2,...,7). The specific padding schematic diagram is shown in FIG. 15.

Embodiment 8

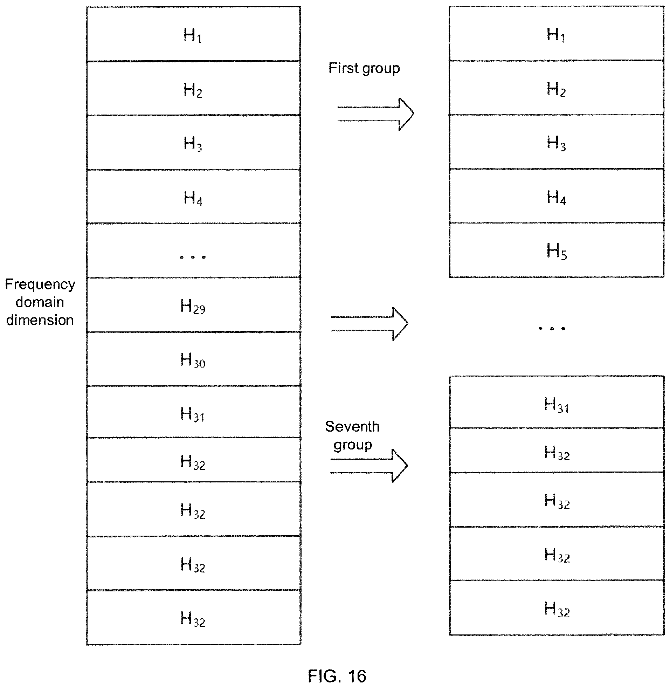

In embodiment 8, when grouping is performed on the frequency domain granularities until a last group, a number of frequency domain granularities $L$ in the last group is smaller than a number of frequency domain granularities $K$ in every other group, i.e., $L < K$. Since there is a certain correlation in the channel information between the frequency domain granularities, the channel information of the last frequency domain granularity is replicated as $K$ - $L$ groups of the last frequency domain granularity in the frequency domain granularity dimension of the channel information for padding, so that the last group satisfies the exact division requirement of grouping. For example, the channel information H is a matrix of 32x32x2, which includes $N_t$ = 32 antennas, $N_f$ =32 frequency domain subbands, and $C$ = 2 channels (a real part and an imaginary part). Every continuous 5 subbands are classified as a group, so the 32 frequency domain subbands are classified as 7 groups. However, in the seventh group, there is only channel information of two subbands, and channel information of three subbands is missing. Therefore, the channel information of the last subband (i.e., with a subband index of 32) is replicated by 3 times for padding in the blank channel information with subband indexes 33-35, so that the channel information $H_j$ of each subband group is a matrix of 32x5x2 (j = 1,2,...,7). The specific padding schematic diagram is shown in FIG. 16.

Embodiment 9

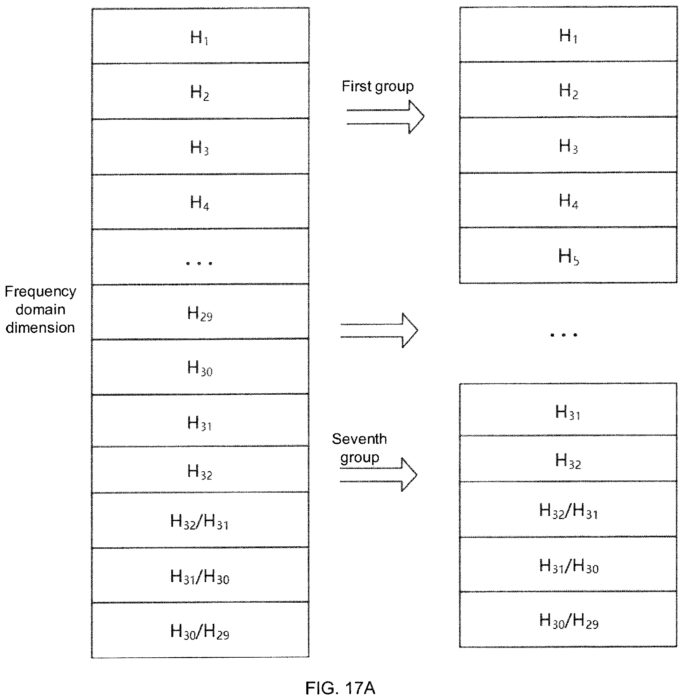

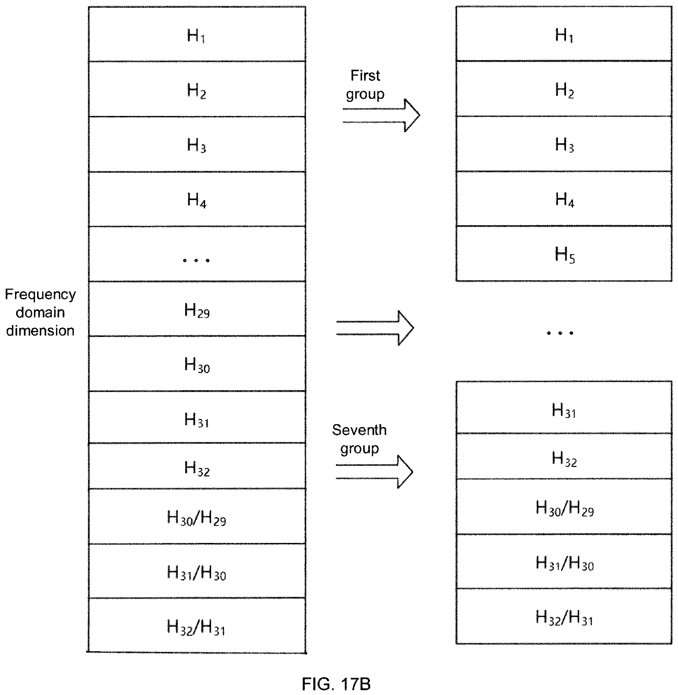

In embodiment 9, when grouping is performed on the frequency domain granularities until a last group, a number of frequency domain granularities L in the last group is smaller than a number of frequency domain granularities $K$ in every other group, i.e., $L < K$. Since there is a certain correlation in the channel information between the frequency domain granularities, the channel information of the frequency domain granularities with reverse $K$ - L indexes from a last frequency domain granularity index (i.e., an index of frequency domain granularity, $N_f$) are used for padding in the frequency domain granularity dimension of the channel information, so that the last group satisfies the exact division requirement of the grouping. For example, the channel information H is a matrix of 32x32x2, which includes $N_t$ = 32 antennas, $N_f$ =32 frequency domain subbands, and $C$ = 2 channels (a real part and an imaginary part). Every continuous 5 subbands are classified as a group, so the 32 frequency domain subbands are classified as 7 groups. However, in the seventh group, there is only channel information of two subbands, and channel information of three subbands is missing. Therefore, as shown in FIG. 17A, the channel information of three subbands from channel information of a last subband (i.e., with an index of subband 32) to a subband index 30 is used for padding in the blank channel information with subband indexes 33-35, so as to make that the channel information $H_j$ of each subband group is a matrix of 32x5x2 ($j$ = 1,2,...,7). It should be noted that, as shown in FIG. 17B, in this padding manner, the channel information of the frequency domain granularities with reverse $K$ - L indexes starting from a second-to last frequency domain granularity (i.e., with an index of frequency domain granularity being $N_f$ - 1) are used for padding, so that the last group satisfies the exact division requirement of the grouping. Taking embodiment 8 as an example, the blank channel information with subband indexes 33-35 that needs to be padded is channel information of three subbands with indexes 31-29. Similarly, the padding in sequence may also be adopted, that is, indexes of $K$ - L frequency domain granularities are used for padding according to a manner from small to large. Taking embodiment 8 as an example, the blank channel information with subbands indexes 33-35 to be padded is the channel information of three subbands with indexes 30-32 or 29-31.

Embodiment 10

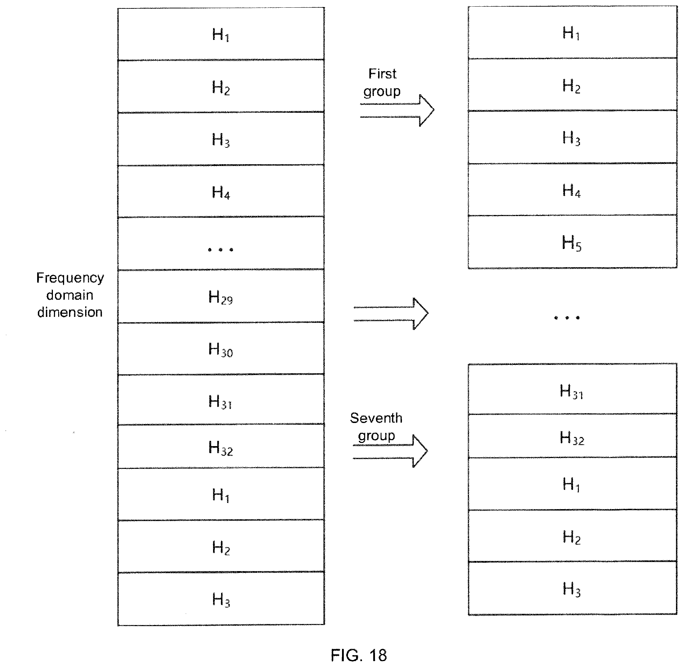

In embodiment 10, when grouping is performed on the frequency domain granularities until a last group, a number of frequency domain granularities $L$ in the last group is smaller than a number of frequency domain granularities $K$ of every other groups, that is, $L < K$. Therefore, the channel information of $K$ - $L$ frequency domain granularities indexed in sequence from an index of a first frequency domain granularity (that is, an index of frequency domain granularity being 1) is used for padding in the frequency domain granularity dimension of the channel information, so that the last group satisfies the exact division requirement of grouping. For example, the channel information H is a matrix of 32x32x2, which includes $N_t$ = 32 antennas, $N_f$ = 32 frequency domain subbands, and $C$ = 2 channels (a real part and an imaginary part). Every continuous 5 subbands are classified as a group, so the 32 frequency domain subbands are classified as 7 groups. However, in the seventh group, there is only channel information of two subbands, and channel information of three subbands is missing. Therefore, the channel information of three subbands with indexes from channel information of a first subband (i.e., a subband index being 1) to an index of subband 3 is used for padding in the blank channel information with subbands indexes 33-35, so that the channel information $H_j$ of each subband group is a matrix of 32x5x2 ($j$ = 1,2,...,7). It should be noted that the initial index may be but is not limited to a first one, and the specific padding schematic diagram is shown in FIG. 18.

Embodiment 11

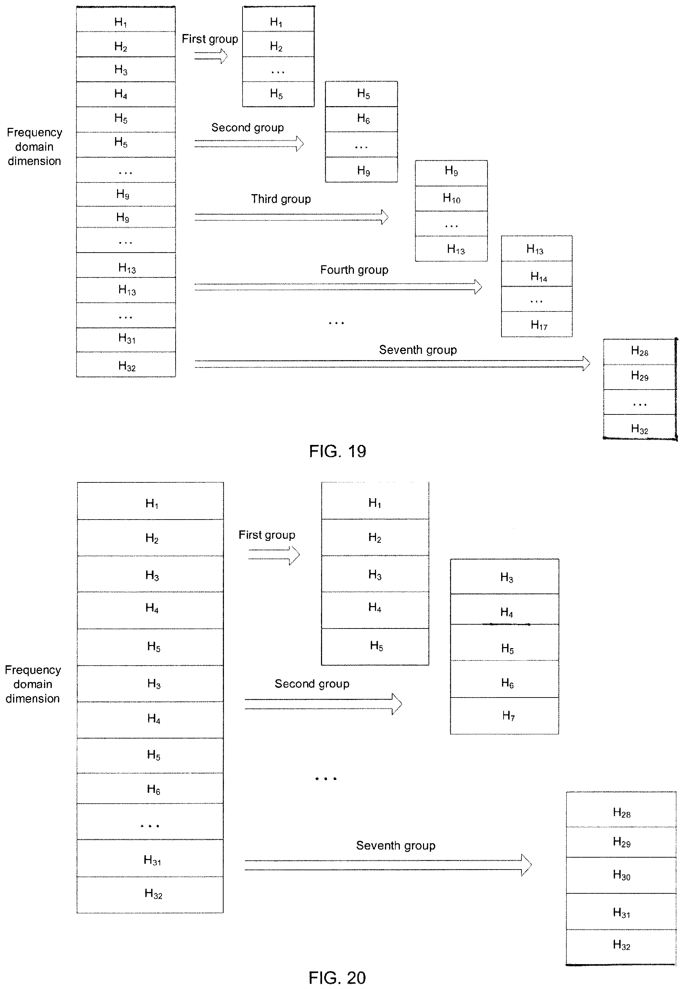

In embodiment 11, when grouping of the frequency domain granularity groups cannot be performed by exact division, this results in that one of the groups has only $L$ frequency domain granularities smaller than $K$ frequency domain granularities in every other groups, that is, $L < K$. Therefore, a certain few of frequency domain granularity groups may be selected therefrom to perform channel information coverage padding to satisfy the exact division requirement of grouping. In an embodiment, $K$ - $L$ frequency domain granularity groups are selected, and the channel information of a first frequency domain granularity in the $K$ - $L$ frequency domain granularity groups is a replication of the channel information of a last frequency domain granularity in a previous frequency domain granularity group. For example, the channel information H is a matrix of 3x3x2, which includes $N_t$ = 32 antennas, $N_f$ = 32 frequency domain subbands, and $C$ = 2 channels (a real part and an imaginary part). Every continuous 5 subbands are classified as a group, so the 32 frequency domain subbands are classified as 7 groups. However, in the 7 divided groups, there is only channel information of two subbands in a certain group, and channel information of three subbands in the one group is missing. Therefore, three subband groups may be selected therefrom for coverage padding. Taking a subband group 2 as an example, the channel information of the subbands in the subband group 2 is the channel information of the subbands with original subband indexes 5, 6, 7, 8, and 9, and the channel information of a first subband in the subband group 2 (a subband index being 5) is consistent with the channel information of a last subband in a first subband group (a subband index being 5), so there is overlapping between two adjacent subband groups. At this time, the channel information $H_j$ of each subband group is a matrix of 32x5x2 ($j$ = 1,2,...,7). The specific padding schematic diagram is shown in FIG. 19.

Embodiment 12

In embodiment 12, the channel information of $K$ - $L$ repeated frequency domain granularities between certain two adjacent frequency domain granularity groups may be selected therefrom. Taking the subband group 2 in the embodiment 11 as an example, channel information of the subbands in the subband group 2 is the channel information of the subbands with original subband indexes 3, 4, 5, 6, and 7. Channel information of a first subband in the subband group 2 (an index of subband being 3) is consistent with the channel information of a third-to-last subband in a first subband group (an index of subband being 3), so that there is overlapping between two adjacent subband groups. At this time, the channel information $H_j$ of each subband group is a matrix of 32x5x2 ($j$ = 1,2,...,7). It should be noted that the channel information of the frequency domain granularity that needs to be supplemented may be based on a number of frequency domain granularity groups that need to be allocated and a number of frequency domain granularities that is supplemented in an overlapped way in each frequency domain granularity group. The specific padding schematic diagram is shown in FIG. 20.
Embodiment 13 to embodiment 15 are used to illustrate a grouping manner for a space domain dimension.
In order to reduce the network complexity of an encoder, an input size of the encoder needs to be reduced. Accordingly, grouping preprocessing needs to be performed on the initial channel state information in the space domain dimension to generate the first channel state information. For example, the initial channel state information is H, which is a matrix of $N_t \times N_f \times C$, or may be a matrix obtained by normalizing obtained channel information. $N_t$ is a number of antenna ports, $N_f$ is a frequency domain granularity, and $C$ is a number of channels,. The dimension of channels $C$ may also be located in a first dimension and is processed in a similar way as that in a third dimension.

Embodiment 13

In embodiment 13, $N_t$ antenna ports of the initial channel state information in the space domain dimension are numbered in sequence as n = 1,2, ..., $N_t$, and every continuous K antenna ports are in a group. The antenna ports in each antenna port group are indexed as i = 1,2,...,K; $N_t$ antenna ports are classified as a total of $\lceil N_t/K \rceil$ antenna port groups, and respective groups are indexed as $j=1,2,...,\lceil N_t/K \rceil$, where $\lceil \cdot \rceil$ is a round-up operation. Therefore, a set of indexes of the antenna ports in a (j)- th group is integers from $I_j$ = (j - 1) $\times$ K + 1 to j $\times$ K, and the (j)-th antenna port group corresponds to channel information $H(J_j, :, :)$, and $j=1,..., \lceil N_t/K \rceil$. For example, the channel information H is a matrix of 32x32x2, which includes $N_t$ = 32 antenna ports, $N_f$ = 32 frequency domain subbands, and C = 2 channels (a real part and an imaginary part). Every continuous 4 antenna ports are classified as a group, so the 32 antenna ports are classified as 8 groups, and the channel information $H_j$ of each group is a matrix of 4x32x2 (j = 1,2,...,8).

Embodiment 14

In embodiment 14, $N_t$ antenna ports of the initial channel state information in the space domain dimension are numbered in sequence as n = 1,2, ..., $N_t$, and every regular-spaced K antenna ports are in a group. The antenna ports in each antenna port group are indexed as i = 1,2,..., K; $N_t$ antenna ports are classified as a total of $\lceil N_t/K \rceil$ antenna port groups, and respective groups are indexed as $j=1,2,...,\lceil N_t/K \rceil$, where $\lceil \cdot \rceil$ is a round-up operation. Therefore, a set of indexes of the antenna ports in a (j)-th group is $I_j = \{(i\text{-}1) \times \lceil N_t/K \rceil + j\}$ $I_j$ and the (j)-th antenna port group corresponds to channel information $H(I_j, :, :)$, and $j=1,...,\lceil N_t/K \rceil$. For example, the channel information H is a matrix of 32x32x2, which includes $N_t$ = 32 antenna ports, $N_f$ = 32 frequency domain subbands, and C = 2 channels (a real part and an imaginary part). Every regular-spaced 4 antenna ports are classified as a group, so the 32 antenna ports are classified as 8 groups, and the channel information $H_j$ of each group is a matrix of 4x32x2 (j = 1,2,...,8). Taking a second antenna port group as an example, the included antenna ports are indexed as {2, 10, 18, 26}. Similarly, several antennas at a head and a tail during grouping the antennas may be combined and stitched together.

Embodiment 15

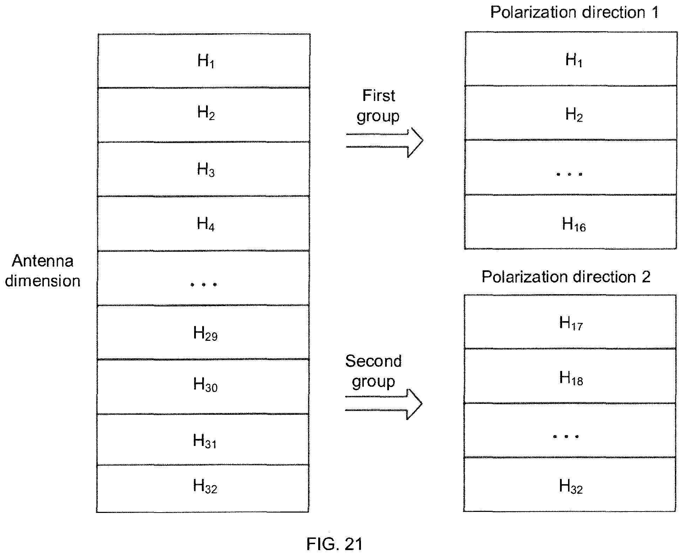

In embodiment 15, $N_t$ antenna ports of the channel information in the space domain dimension are numbered in sequence as n = 1,2, ..., $N_t$ and are classified as a group according to a polarization direction of an antenna. If the antenna is a single-polarization antenna (with only one polarization direction), the $N_t$ antenna ports are classified as 1 polarization antenna port group, and the antenna ports in the antenna port group in each polarization direction are indexed as i = 1,2, ..., $N_t$; and if the antenna is a dual-polarization antenna (with two polarization directions), the $N_t$ antenna ports are classified as 2 polarization antenna port groups, and the antenna ports in the antenna port group in each polarization direction are indexed as i = 1,2,..., K, where K = Nt/2. Therefore, a set of indexes of the antenna ports of a (j)-th group is integers from $I_j$ = (j - 1) $\times$ K + 1 to j $\times$ K, and the (j)-th antenna port group corresponds to channel information $H(I_j, :, :)$, and j = 1,2. For example, the channel information H is a matrix of 32x32x2, which includes $N_t$ = 32 dual-polarization antenna ports, $N_f$ = 32 frequency domain subbands, and C = 2 channels (a real part and an imaginary part). According to the polarization direction of the antennas, the 32 dual-polarization antenna ports are classified as 2 groups, and each group has 16 antennas. The channel information $H_j$ of each group is a matrix of 16x32x2 (j = 1,2). The specific grouping schematic diagram is shown in FIG. 21.

Embodiment 16

Embodiment 16 is used to illustrate a layer grouping manner.
In order to reduce the network complexity of an encoder, an input size of the encoder needs to be reduced. Accordingly, grouping preprocessing needs to be performed on the initial channel state information in a layer dimension to generate the first channel state information. For example, the initial channel state information is H, which is a matrix of $N_t \times N_f \times L \times C$, or may be a matrix obtained by normalizing obtained channel information. $N_t$ is a number of antenna ports, $N_f$ is a frequency domain granularity, L is a number of layers (also called a rank), and C is a number of channels,. The dimension of channels C may also be located in a first dimension and is processed in a similar way as that in a fourth dimension.
In embodiment 16, L layers of the channel information in the layer dimension are numbered in sequence as n = 1,2,..., L, every continuous K layers are in a group, and layers in each layer granularity group are indexed as i = 1,2,...,K; L

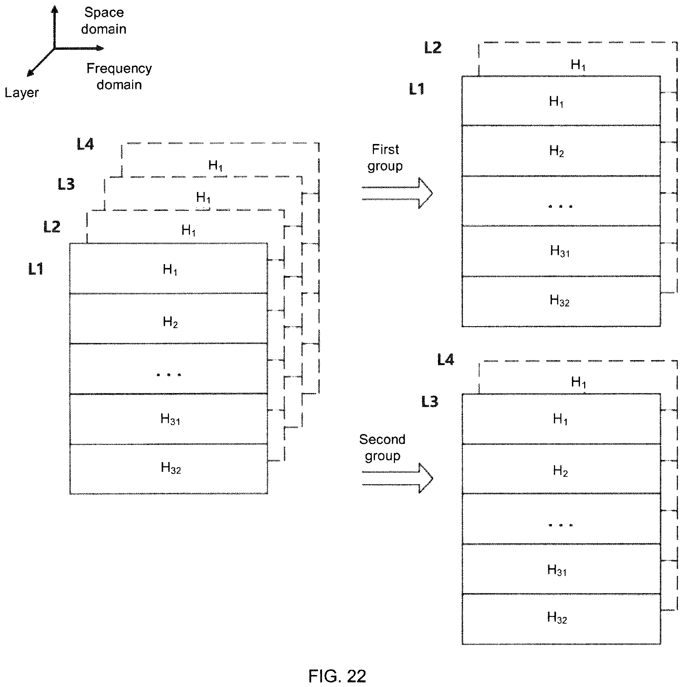

layers are classified as a total of $\lceil L/K \rceil$ layer granularity groups, and respective groups are indexed as $j=1,2,...,\lceil L/K \rceil$, where $\lceil \cdot \rceil$ is a round-up operation. Therefore, a set of indexes of layer granularities in a (*j*)-th group is integers from $I_j = (j-1) \times K + 1$ to $j \times K$, and the (*j*)-th layer granularity group corresponds to channel information $H$ $(:, :, I_j, :)$, and $j=1, \cdots, \lceil L/K \rceil$. For example, the channel information H is a matrix of 32x32x4x2, which includes $N_t$ = 32 antennas, $N_f$ = 32 frequency domain subbands, $L$ = 4 layers, and $C$ = 2 channels (a real part and an imaginary part). Every continuous 2 layers are classified as a group, so the 4 layers are classified as 2 groups. The channel information $H_j$ of each group is a matrix of 32x32x2x2 ($j$ = 1,2). The specific grouping schematic diagram is shown in FIG. 22. Similarly, in layer grouping, several regular-spaced layers may be classified as a group, or may be combined at a head layer and a tail layer to be stitched together.

Embodiment 17

Embodiment 17 is used to illustrate a time domain grouping manner.

In order to reduce the network complexity of an encoder, an input size of the encoder needs to be reduced. Accordingly, the grouping preprocessing needs to be performed on the initial channel state information in a time domain dimension to generate the first channel state information. For example, the initial channel state information is *H,* which is a matrix of $N_t \times N_f \times T \times C$, or may be a matrix obtained by normalizing obtained channel information. $N_t$ is a number of antenna ports, $N_f$ is a frequency domain granularity, $T$ is a number of layer time domain granularities, and $C$ is a number of channels. The dimension of channels $C$ may also be located in a first dimension, and is processed similar to that in a fourth dimension. It should be noted that, for the sake of simplicity, in the embodiments of the present disclosure, a channel of a layer L=1 is take as an example, that is, it is a matrix of $N_t \times N_f \times T \times C$ after a layer dimension in a channel matrix is ignored; and a case of a layer $L$ > 1 is also applicable, that is, the layer dimension in the channel matrix is $N_t \times N_f \times L \times T \times C$. Respective dimensions may be swapped in sequence according to actual conditions.

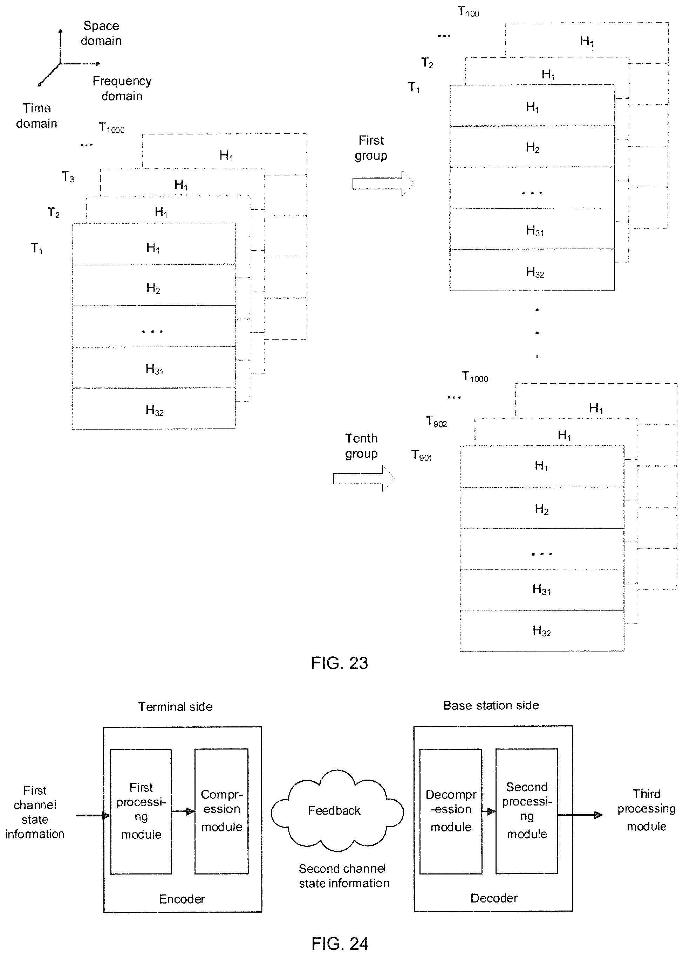

In embodiment 17, $T$ time domain granularities of the channel information in the time domain dimension are numbered in sequence as n = 1,2,..., $T$, and every continuous $K$ time domain granularities are in a group. The time domain granularities in each time domain granularity group are indexed as i = 1,2,..., $K$; the $T$ time domain granularities are classified as a total of $\lceil T/K \rceil$ time domain granularity groups, and respective groups are indexed as $j=1,2,...,\lceil T/K \rceil$ (where the time domain granularity group may be a slot group, a transmission time interval group, or a determined time interval group), where $\lceil \cdot \rceil$ is a round-up operation. Therefore, a set of indexes of the time domain granularities of a (j)-th group is integers from $I_j$ =(j-1) $\times$ K+1 to $j \times K$, and the (j)-th time domain granularity group corresponds to channel information $H(:, :, I_j, :)$, and $j=1, \cdots, \lceil T/K \rceil$. For example, the channel information H is a matrix of 32x32x1000x2, which includes $N_t$ = 32 antennas, $N_f$ = 32 frequency domain subbands, $T$ = 1000 transmission time intervals (TTI), and $C$ = 2 channels (a real part and an imaginary part). Every continuous 100 TTI channels are classified as a group, so the 1000 TTI channels are classified as 10 groups. The channel information $H_j$ of each group is a matrix of 32x32x100x2 ( $j$ = 1,2,...10). The specific grouping schematic diagram is shown in FIG. 23. Similarly, in time domain granularity grouping, several regular-spaced time domain granularities may be classified as a group.

Embodiment 18

Embodiment 18 is used to illustrate structures of an encoder and a decoder in a neural network.

Feedback of the channel state information implemented by an artificial intelligence may be implemented through a deep learning neural network. The neural network herein is an autoencoder, and the autoencoder includes at least a pair of encoder and decoder. Generally speaking, the encoder is located at a terminal side and the decoder is located at a base station side. The encoder generally includes two modules, namely: a first processing module for extracting features of the channel information, and a compression module for compressing the channel information. The decoding module also includes two modules, namely: a decompression module for decompressing the channel state information, and a second processing module for restoring the features of the decompressed channel state information, as shown in FIG. 24.

A terminal obtains first channel state information by grouping preprocessing and sends the first channel state information to the encoder; and the features are extracted from the channel information by the first processing module and then pass through the compression module, so as to output compressed second channel state information. The encoder includes the first processing module and the compression module. The first processing module is a sub-neural network including C network layers, and each layer of the network may be at least one of a fully connected layer, a convolutional layer, a pooling layer, a direct connection layer, and a batch normalization layer, etc. The compression module may be a

fully connected layer, $C_1$ convolutional layers (or a plurality of residual blocks (resblock), dense blocks (denseblocks)), or a recurrent network (e.g., a long short-term memory (LSTM) or a gated recurrent neural network (GRU)), a transformer structure, etc. At the base station side, the decoder corresponding to the encoder includes the decompression module and the second processing module. The decoder receives the second channel state information, decompresses the second channel state information, extracts features from the decompressed second channel state information, and outputs third channel state information. The second processing module is also a sub-neural network, including L network layers, where an (i)-th layer may be a convolutional layer, or a pooling layer, a direct connection layer, or a combination thereof, or a residual network or a dense block composed of a few convolutional layers. The decompression module is also a fully connected layer, $C_2$ deconvolution layers (e.g., up sampling layers, up-pooling layers, transposed convolution layers, and their combinations with various residual blocks, dense blocks, and convolution layers), an LSTM, a GRU, a transformer structure, etc. Exemplarily, the second channel state information may also be quantized, encoded, modulated, and then transmitted to the base station. The base station may also dequantize, demodulate, decode the received channel state information and then be used the processed channel state information as an input to the decoder, and the decoder outputs the third channel state information.

Embodiment 19

Embodiment 19 is used to illustrate a feedback polarization phase assistance manner.

In a dual-polarization antenna grouping feedback manner, since two groups of antennas with different polarization directions have different polarization phases, the polarization phase feedback of an antenna may also be extracted to assist in restoring the channel information. Assuming the initial channel information is

$$H = \begin{bmatrix} a_{11} + b_{11}i & a_{12} + b_{12}i & \cdots & a_{1N_f} + b_{1N_f}i \\ a_{21} + b_{21}i & a_{22} + b_{22}i & \cdots & a_{2N_f} + b_{2N_f}i \\ \vdots & \vdots & \ddots & \vdots \\ a_{N_t1} + b_{N_t1}i & a_{N_t2} + b_{N_t2}i & \cdots & a_{N_tN_f} + b_{N_tN_f}i \end{bmatrix}$$

a channel matrix *H* is classified as two groups $H_1$ and $H_2$ according to two polarization directions of the antenna, each group has a number of antennas of M = *Nt/2,* and the two groups of channel matrices are preprocessed and decomposed in amplitude and in phase to obtain $H_1$' and $H_2$', where the amplitude matrix is:

$$A = \begin{bmatrix} \sqrt{a_{11}^2 + b_{11}^2} & \sqrt{a_{12}^2 + b_{12}^2} & \cdots & \sqrt{a_{1N_f}^2 + b_{1N_f}^2} \\ \sqrt{a_{21}^2 + b_{21}^2} & \sqrt{a_{22}^2 + b_{22}^2} & \cdots & \sqrt{a_{2N_f}^2 + b_{2N_f}^2} \\ \vdots & \vdots & \ddots & \vdots \\ \sqrt{a_{M1}^2 + b_{M1}^2} & \sqrt{a_{M2}^2 + b_{M2}^2} & \cdots & \sqrt{a_{MN_f}^2 + b_{MN_f}^2} \end{bmatrix}$$

the phase matrix is:

$$\Phi = \begin{bmatrix} \arctan\dfrac{b_{11}}{a_{11}} & \arctan\dfrac{b_{12}}{a_{12}} & \cdots & \arctan\dfrac{b_{1N_f}}{a_{1N_f}} \\ \arctan\dfrac{b_{21}}{a_{21}} & \arctan\dfrac{b_{22}}{a_{22}} & \cdots & \arctan\dfrac{b_{2N_f}}{a_{2N_f}} \\ \vdots & \vdots & \ddots & \vdots \\ \arctan\dfrac{b_{M1}}{a_{M1}} & \arctan\dfrac{b_{M2}}{a_{M2}} & \cdots & \arctan\dfrac{b_{MN_f}}{a_{MN_f}} \end{bmatrix}$$

Therefore, the channel matrix H' of each polarization direction antenna group may be expressed as H' = A · e$^{i\Phi}$. First, an index $I$ of an antenna corresponding to a maximum amplitude value A$_{max}$ of the antenna at each frequency domain granularity (if the channel matrix $H$ is a matrix of $N_t \times N_f$, each column expresses the frequency domain granularity) in a first polarization direction antenna group, where $I_{max}$ = [$I_1$, $I_2$, ... , $I_{Nf}$]. Phase information $P_1$ = [$\Phi_1$,$\Phi_2$,···$\Phi_{Nf}$] under an index that is an index of an antenna corresponding to the maximum amplitude value A$_{max}$ of the antenna at respective frequency domain granularities is determined according to the index of the antenna, and phase information

$$P_2 = [\Phi'_1, \Phi'_2, \cdots, \Phi'_{N_f}]$$ 

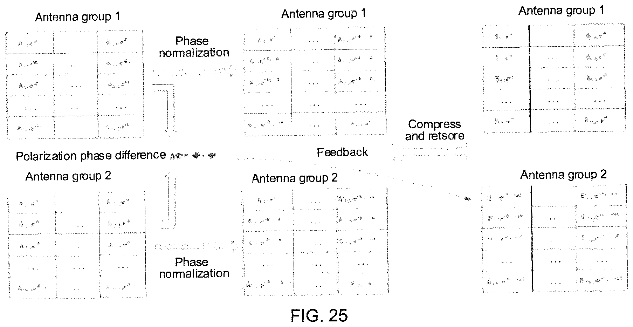

under the index in a second polarization direction antenna group is also determined, and the polarization phase difference is $\Delta P = P_1 - P_2$. Second, the channel information of the two antenna groups needs to be normalized in phase. The phase $P_1$ of the channel of the antenna corresponding to the maximum amplitude value at the frequency domain granularity needs to be subtracted from the phase of the channel information of different antennas at each frequency domain granularity to complete the phase normalization. The operation on the antenna group in the second polarization direction is the same. It is necessary to subtract the phase $P_2$ of the channel of a corresponding antenna at each frequency domain granularity, so as to complete the phase normalization. The channel information after the phase normalization is used as the input information of the encoder at the terminal, and the polarization phase difference as the assistance information also needs to be fed back to the base station at the same time. Final restored channel information is obtained by adding the fed back polarization phase difference to the phase of the channel information in the second polarization direction antenna group restored by the base station, and the amplitude and phase information is converted back to a complex form of the initial channel information through a formula H' = A · e$^{i\Phi}$, as shown in FIG. 25.

Embodiment 20

Embodiment 20 is used to illustrate how to obtain a parameter of a neural network.

According to different actual environmental scenarios and through the above training process, $K_0$ sets of neural network parameters of an autoencoder are obtained, and each autoencoder includes a pair of encoder and decoder. The terminal and the base station save $K_0$ sets of neural network parameters of the encoder and decoder respectively. When in use, the base station configures $K_0$ sets of indexes of an encoder and decoder pair through high-level signaling according to the channel condition, so that the terminal receives the index and knows which set of encoder parameters are used. That is, the base station configures the index of the pair of encoder and decoder, and the terminal receives the index of the pair of encoder and decoder to determine corresponding parameters of the encoder. The terminal selects one of the encoders according to the channel scenario, at least one of an angle spread, a delay spread, a Doppler spread of the channel, etc.; and transmits the index of the selected encoder to the base station through a physical layer and/or high layer signaling. The base station obtains a corresponding decoder through the index of an encoding network fed back by the terminal, and processes the received second channel information to obtain the third channel information. If there is only $K_0$ = 1 sets of parameters of the encoder, the terminal may feedback an index 0.

Embodiment 21

Embodiment 21 is used to illustrate how to set and acquire a grouping parameter.

A base station configures, sets and saves the grouping parameter by itself according to the grouping method in the above embodiments, and transmits the configured grouping parameter to a terminal through high-layer and/or physical layer signaling. The terminal performs grouping preprocessing on obtained downlink channel state information according to signaling indication of the grouping parameter configured by the base station to generate the first channel state information.

In an embodiment, the base station needs to set a 1-bit indication index to determine whether grouping preprocessing on the channel state information is required. Exemplarily, bit 0 indicates that the grouping preprocessing does not to need to be performed on the downlink channel state information; and bit 1 indicates that the grouping preprocessing needs to be performed on the downlink channel state information. Of course, the contents represented by the bits 0 and 1 can also be reversed. The base station also needs to feed back a number of resource granularities of each group after grouping to the base station, and the number of resource granularities $K$ of each group may be encoded using, but is not limited to, binary encoding (0 and 1 bits) manner. Exemplarily, after grouping, a number of resource granularities of each group is 5, and 3 bits, 101, are needed to represent the number 5 and are fed back to the terminal to indicate that the number of resource granularities of each group is 5.

In an embodiment, the grouping manners of different dimensions are configured in a list. Exemplarily, grouping in the frequency domain dimension is numbered as 0, the space domain dimension is numbered as 1, grouping in the layer group is numbered as 2, and so on; and according to a number of numberings, the numberings may be encoded using, but not limited to, binary encoding (0 and 1 bits). Correspondingly, grouping in the frequency domain dimension is numbered as 00, the space domain dimension is numbered as 01, and grouping in the layer group is numbered as 10, etc.

In an embodiment, the base station needs to set 1 bit to determine whether the exact division is performed for grouping of the resources (whether padding is required to make it being exactly divided), bit 0 represents that the exact division is performed for grouping of resources and no resource padding for the grouping is required; and bit 1 represents that the exact division is not performed for the grouping of the resources and resource padding for the grouping is required. Of course, the contents represented by bits 0 and 1 can also be reversed.

In an embodiment, when the exact division is not performed for grouping, the base station may set a list according to the methods for solving the problem that the exact division is not performed for grouping in the above embodiments, and different methods are numbered in sequence from 0, and so on. According to a number of numberings, the numberings may be encoded using, but not limited to, binary coding (0 and 1 bits). Correspondingly, a zero-padding method is numbered as 000, tail channel information replication is numbered as 001, and tail channel information reverse padding is numbered as 010, etc.

In an embodiment, when a problem that the exact division is not performed for grouping is encountered, and when the base station adopts a coverage padding method, the base station needs to determine a number M of channel information resources for padding, an overlapped padding position, and a size of an overlapped resource. The number of information resources for padding is $M = \lceil N/K \rceil \times K - N$, where $N$ is a number of channel resources and $K$ is a number of resources in each group. The base station needs to use two parameters to determine M piece of resource channel information for overlapped padding. One of the two parameters is position information of the overlapped padding, which needs to be composed of an index of a group and an index of an intra-group granularity, and is numbered in sequence from 0. Exemplarily, if the overlapped padding needs to be performed on a first granularity in a second group, its index of group is 1 and an index of intra-group granularity is 0. In order to interact with the terminal, the base station may, but is not limited to, encode the index by using binary encoding (0 and 1 bit) according to a number of groups and a number of resource granularities in the group. Taking the above example as an example, an encoded index of group is 001 and an encoded index of intra-group granularity is 000. The second of the two parameters is the size of the overlapped resource. Exemplarily, if the overlapped resource is of 2 resource granularities, last two piece of intra-group granularity channel information in a previous group needs to be determined to be overlapped and padded in the position determined by the position information. Similarly, in order to interact with the terminal, the base station may, but is not limited to, encode the index by using binary encoding (0 and 1 bits) according to the number of the resource granularities for overlapped padding. Taking the above example as an example, the number of the resource granularities for padding after being encoding is encoded as 010.

It should be noted that the number of bits encoded in the above embodiments may be binary adaptively encoded according to a total number of required resources. Exemplarily, if a total number of indexes that needs to be encoded is 3, only two binary bits are required for encoding.

The terminal feeds back the grouped second channel information to the base station. The grouped third channel state information restored by the base station is used to select final channel state information of a same size as the initial downlink channel state information, as a final result fed back by the terminal, according to the position information of grouping previously configured at the base station side.

Similarly, the base station may configure signaling of some grouping parameters, and the remaining grouping parameters may be autonomously implemented by the terminal side for grouping preprocessing. In an embodiment, the terminal pre-sets and saves a group configuration list, that is, a list of methods for processing the above-mentioned exact division and not exact division of the group resources; the information of the list of the group configuration completely set by the terminal is fed back to the base station through high-layer and/or physical layer signaling; and the base station needs to record and save the list to achieve synchronization of the lists of the grouping operation between the terminal and the base station. At this time, the base station side only needs to configure a grouping indication index, the information of the number of group resource granularity, and an indication index of whether the exact division may be performed for grouping; and send them to the terminal through the high-level and/or physical layer signaling. The terminal autonomously selects the corresponding solution according to the related grouping indication signaling sent by the base station to perform group preprocessing on the obtained downlink channel state information to generate the first channel state information. The terminal needs to feed back the second channel state information processed by the encoder and the index/information of the list of the grouping processing method selected by the terminal to the base station. The base station finally selects the third state information restored by the decoder according to the index/information of the list of the group processing method fed back by the terminal to obtain the final restored downlink channel state information. Exemplarily, when the frequency domain resource channel is of 32 subbands, the base station configure that the group preprocessing needs to be performed on the 32 subbands and each group includes 5 pieces of subband channel information. At this time, exact division may not be implemented for grouping. If the terminal adopts the manner of padding the last three subband resource channels of the last group with 0 to satisfy the group division manner, the base station will finally discard the last three pieces of subband channel information corresponding to the restored third channel state information according to the position indexes of the last three subband to be processed fed back by the terminal to ensure to be the same as the initial 32 subband channel information dimensions, as downlink channel state information finally fed back by the terminal.

It should be noted that when the exact division is not implemented for grouping and a resource needs to be used for padding to perform exact division, the resource group to be padded also uses the same network parameters for compression feedback. If the usage of the same network parameters results in performance degradation, the terminal needs to select other network parameters for performing compression feedback according to the indication requirement fed back by the base station side or the terminal autonomously selects other network parameters for performing compression feedback according to the indication.

It may be understood by those skilled in the art that, all or some of the steps in the method, the function modules/units in the system and the device disclosed above may be implemented as a software, a firmware, a hardware, and a suitable combination thereof. In hardware implementations, the division between functional modules/units mentioned in the above description does not necessarily correspond to the division of physical components. For example, one physical component may have multiple functions, or one function or step may be performed by several physical components in cooperation. Some or all of the physical components may be implemented as a software executed by a processor, such as a central processor, a digital signal processor or a microprocessor, or implemented as a hardware, or implemented as an integrated circuit, such as an application specific integrated circuit. Such software may be distributed on a computer readable medium, which may include a computer storage medium (or a non-transitory medium) and a communication medium (or a transitory medium). As well known to those skilled in the art, the term, computer storage medium, includes volatile and non-volatile, removable and non-removable medium implemented in any method or technology for storing information (e.g., computer readable instructions, data structures, program modules or other data). The computer storage medium includes, but is not limited to, an RAM, an ROM, an EEPROM, a flash or other memory technologies, a CD-ROM, a digital versatile disk (DVD) or other optical disk storages, magnetic cassettes, tapes, disk storages or other magnetic storage means, or any other medium that may be used to store desired information and may be accessed by a computer. In addition, it is well known to those skilled in the art that, a communication medium generally includes computer readable instructions, data structures, program modules or other data in a modulation data signal such as a carrier wave or other transmission mechanisms, and may include any information delivery medium.

Example embodiments have been disclosed herein, and although specific terms are employed, they are used and should be interpreted only in a generic and descriptive sense and not for purpose of limitation. In some instances, it will be apparent to those skilled in the art that, unless expressly stated otherwise, features, characteristics, and/or elements described in conjunction with a particular embodiment may be used alone or in combination with features, characteristics, and/or elements described in conjunction with other embodiments. Accordingly, it will be understood by those of ordinary skill in the art that various changes in form and details may be made without departing from the scope of the present disclosure as set forth in the following claims.

A person skilled in the art will understand that the scope of the present disclosure is not limited to specific embodiments discussed above and may modify and substitute some elements of the embodiments without departing from the spirits of this application. The scope of this application is limited by the appended claims.

**Claims**

1. A channel state information processing method, comprising:

    performing, in a target dimension, grouping preprocessing on initial channel state information to obtain a plurality pieces of first channel state information;
    encoding the plurality pieces of first channel state information to generate second channel state information; and
    feeding back the second channel state information.

2. The processing method according to claim 1, wherein the performing, in the target dimension, the grouping preprocessing on the initial channel state information to obtain the plurality pieces of first channel state information comprises:
    dividing a plurality of resource granularities of the initial channel state information in the target dimension into a plurality of resource granularity groups, so as to obtain the plurality pieces of first channel state information, wherein the plurality of resource granularity groups are in one-to-one correspondence with the plurality pieces of first channel state information.

3. The processing method according to claim 2, wherein the dividing the plurality of resource granularities of the initial channel state information in the target dimension into the plurality of resource granularity groups, so as to obtain the plurality pieces of first channel state information comprises:

classifying every continuous grouping granularity number of resource granularities among the plurality of resource granularities of the initial channel state information in the target dimension as a resource granularity group, according to the grouping granularity number, so as to obtain the plurality pieces of first channel state information, wherein the grouping granularity number characterizes a number of resource granularities in the resource granularity group.

4.  The processing method according to claim 2, wherein the dividing the plurality of resource granularities of the initial channel state information in the target dimension into the plurality of resource granularity groups, so as to obtain the plurality pieces of first channel state information comprises:

classifying every regular-spacingly arranged grouping granularity number of resource granularities among the plurality of resource granularities of the initial channel state information in the target dimension as a resource granularity group, according to the grouping granularity number, so as to obtain the plurality pieces of first channel state information, wherein the grouping granularity number characterizes a number of resource granularities in the resource granularity group.

5.  The processing method according to claim 2, wherein the dividing the plurality of resource granularities of the initial channel state information in the target dimension into the plurality of resource granularity groups, so as to obtain the plurality pieces of first channel state information, comprises:

dividing a plurality of resource blocks in the initial channel state information into the plurality of resource granularity groups according to a grouping granularity number, so as to obtain the plurality pieces of first channel state information, wherein the grouping granularity number characterizes a number of resource granularities in a resource granularity group, a resource block comprises some of the plurality of resource granularities, and a sum of numbers of resource granularities comprised in all resource blocks classified as a resource granularity group is equal to the grouping granularity number.

6.  The processing method according to claim 5, wherein the dividing the plurality of resource blocks in the initial channel state information into the plurality of resource granularity groups according to the grouping granularity number, so as to obtain the plurality pieces of first channel state information, comprises:

classifying resource granularities of every regular-spacingly arranged multiple resource blocks among the plurality of resource blocks in the initial channel state information as a resource granularity group according to the grouping granularity number, so as to obtain the plurality pieces of first channel state information.

7.  The processing method according to claim 5, wherein the dividing the plurality of resource blocks in the initial channel state information into the plurality of resource granularity groups according to the grouping granularity number, so as to obtain the plurality pieces of first channel state information, comprises:

classifying resource granularities in the plurality of resource blocks into the plurality of resource granularity groups in a head-and-tail stitching manner according to the grouping granularity number, so as to obtain the plurality pieces of first channel state information.

8.  The processing method according to claim 2, wherein the dividing the plurality of resource granularities of the initial channel state information in the target dimension into the plurality of resource granularity groups, so as to obtain the plurality pieces of first channel state information, comprises:

classifying randomly, every grouping granularity number of resource granularities among the plurality of resource granularities of the initial channel state information in the target dimension into a resource granularity group, according to the grouping granularity number, so as to obtain the plurality pieces of first channel state information, wherein the grouping granularity number characterizes a number of resource granularities in the resource granularity group.

9.  The processing method according to any one of claims 2 to 8, wherein the dividing the plurality of resource granularities of the initial channel state information in the target dimension into the plurality of resource granularity groups, so as to obtain the plurality pieces of first channel state information, further comprises:

in a case where a number of the plurality of resource granularities of the initial channel state information in the target dimension is not exactly divided by a grouping granularity number, padding with a resource granularity, wherein the grouping granularity number characterizes a number of resource granularities in the resource granularity group.

10. The processing method according to claim 9, wherein the padding with the resource granularity comprises:

padding with a to-be-padded number of preset resource granularities in a first target resource granularity group according to the to-be-padded number, wherein the to-be-padded number is a number of resource granularities that need to be used for padding, and the first target resource granularity group is a resource granularity group that has a number of resource granularities less than the grouping granularity number before the padding with the resource granularity.

11. The processing method according to claim 9, wherein the padding with the resource granularity comprises: replicating a first target resource granularity as a to-be-padded number of first target resource granularities according to the to-be-padded number, and padding with the to-be-padded number of first target resource granularities into a first target resource granularity group, wherein the first target resource granularity is one of the plurality of resource granularities of the initial channel state information in the target dimension, the to-be-padded number is a number of resource granularities that need to be used for padding, and the first target resource granularity group is a resource granularity group that has a number of resource granularities less than the grouping granularity number before the padding with the resource granularity.

12. The processing method according to claim 9, wherein the padding with the resource granularity comprises:

replicating a to-be-padded number of resource granularities in a to-be-padded sequence and padding with the to-be-padded number of resource granularities into a first target resource granularity group,
wherein the to-be-padded sequence comprises a to-be-padded number of resource granularities, the to-be-padded number is a number of resource granularities that need to be used for padding, and the first target resource granularity group is a resource granularity group that has a number of resource granularities less than the grouping granularity number before the padding with the resource granularity.

13. The processing method according to claim 12, wherein the replicating a to-be-padded number of resource granularities in a to-be-padded sequence and padding with the to-be-padded number of resource granularities into a first target resource granularity group, comprises:

forming the to-be-padded sequence with the to-be-padded number of resource granularities that are continuous in a forward order or a reverse order taking a second target resource granularity as a starting point; and replicating and padding with the resource granularities in the to-be-padded sequence into the first target resource granularity group.

14. The processing method according to claim 9, wherein the padding with the resource granularity comprises:

determining an overlapped padding position and a size of an overlapped resource of at least one second target resource granularity group according to a to-be-padded number, wherein the overlapped padding position characterizes a position of the second target resource granularity group, and the size of the overlapped resource characterizes a number of resource granularities that need to be used for padding in the second target resource granularity group; and
performing overlapped padding on respective second target resource granularity groups according to overlapped padding positions and sizes of overlapped resources of the respective second target resource granularity groups.

15. The processing method according to claim 14, wherein the determining the overlapped padding position and the size of the overlapped resource of the at least one second target resource granularity group according to the to-be-padded number, comprises:

determining a continuous first number of second target resource granularity groups according to the to-be-padded number, the size of the overlapped resource of each second target resource granularity group being a second number, wherein a product of the first number and the second number is equal to the to-be-padded number; and
the performing overlapped padding on the respective second target resource granularity groups according to the overlapped padding positions and the sizes of the overlapped resources of the respective second target resource granularity groups, comprises:
replicating a second number of resource granularities at a tail of a previous resource granularity group of each second target resource granularity group, as an initial second number of resource granularities of the each second target resource granularity groups.

16. The processing method according to claim 14, wherein the determining the overlapped padding position and the size of the overlapped resource of the at least one second target resource granularity group according to the to-be-padded number, comprises:

determining a second target resource granularity group, wherein a size of an overlapped resource of the second target resource granularity group is the to-be-padded number; and

the performing the overlapped padding on the respective second target resource granularity groups according to the overlapped padding positions and the sizes of the overlapped resources of the respective second target resource granularity groups, comprises:

replicating the to-be-padded number of resource granularities at a tail of a previous resource granularity group of the second target resource granularity group according to the to-be-padded number as an initial to-be-padded number of resource granularities of the second target resource granularity group.

17. The processing method according to claim 14, wherein the determining the overlapped padding position and the size of the overlapped resource of the at least one second target resource granularity group according to the to-be-padded number, comprises:

determining a plurality of second target resource granularity groups and sizes of overlapped resources of respective second target resource granularity groups, wherein sizes of overlapped resources of at least two of the second target resource granularity groups are different from each other.

18. The processing method according to any one of claims 1 to 17, wherein the target dimension comprises at least one of: a frequency domain dimension, a space domain dimension, a layer dimension, and a time domain dimension.

19. The processing method according to any one of claims 1 to 18, wherein

before the performing, in the target dimension, grouping preprocessing on the initial channel state information to obtain the plurality pieces of first channel state information, the processing method further comprises:

receiving a grouping signaling, wherein the grouping signaling carries a grouping parameter; and

the performing, in the target dimension, grouping preprocessing on the initial channel state information to obtain the plurality pieces of first channel state information, comprises:

performing, in the target dimension, grouping preprocessing on the initial channel state information according to the grouping parameter, so as to obtain the plurality pieces of first channel state information.

20. A channel state information processing method, comprising:

receiving second channel state information;

decoding the second channel state information to obtain a plurality pieces of third channel state information, wherein the plurality pieces of third channel state information are in one-to-one correspondence with a plurality pieces of first channel state information obtained by performing, in a target dimension, grouping preprocessing on initial channel state information; and

generating target channel state information according to the plurality pieces of third channel state information.

21. The processing method according to claim 20, wherein the generating the target channel state information according to the plurality pieces of third channel state information, comprises:

obtaining the target channel state information according to the plurality pieces of third channel state information and a grouping manner for performing, in the target dimension, grouping preprocessing on the initial channel state information.

22. The processing method according to claim 21, wherein the obtaining the target channel state information according to the plurality pieces of third channel state information and the grouping manner for performing, in the target dimension, grouping preprocessing on the initial channel state information, comprises:

combining the plurality pieces of third channel state information sequentially in the target dimension to obtain the target channel state information, wherein the plurality pieces of first channel state information are obtained by classifying every continuous resource granularity number of grouping granularities among the plurality of resource granularities of the initial channel state information in the target dimension into a resource granularity group.

23. The processing method according to claim 21, wherein the obtaining the target channel state information according to the plurality pieces of third channel state information and the grouping manner for performing, in the target dimension, grouping preprocessing on the initial channel state information, comprises:

determining a correspondence relationship between a resource granularity in respective third channel state information and a resource granularity in the initial channel state information according to the grouping manner for performing, in the target dimension, grouping preprocessing on the initial channel state information; and combining resource granularities in the plurality pieces of third channel state information to obtain the target channel state information according to the correspondence relationship between the resource granularity in the respective third channel state information and the resource granularity in the initial channel state information.

24. The processing method according to claim 23, wherein the correspondence relationship between the resource granularity in the third channel state information and the resource granularity in the initial channel state information comprises: the resource granularities in the third channel state information corresponding to a regular-spacingly arranged grouping granularity number of resource granularities in the initial channel state information, wherein the plurality pieces of first channel state information are obtained by classifying every regular-spacingly arranged grouping granularity number of resource granularities in the initial channel state information into a resource granularity group.

25. The processing method according to claim 23, wherein the correspondence relationship between the resource granularity in the third channel state information and the resource granularity in the initial channel state information comprises: the resource granularities in the third channel state information corresponding to some of a plurality of resource blocks in the initial channel state information; wherein the plurality pieces of first channel state information are obtained by classifying the plurality of resource blocks in the initial channel state information into a plurality of resource granularity groups, a resource block comprises multiple resource granularities, and a sum of numbers of resource granularities comprised in all resource blocks classified as a resource granularity group is equal to a grouping granularity number.

26. The processing method according to claim 23, wherein the correspondence relationship between the resource granularity in the third channel state information and the resource granularity in the initial channel state information comprises: the resource granularities in the third channel state information corresponding to a randomly arranged grouping granularity number of resource granularities in the initial channel state information, wherein the plurality pieces of first channel state information are obtained by randomly classifying every grouping granularity number of resource granularities in the initial channel state information into a resource granularity group.

27. The processing method according to any one of claims 22 to 26, wherein the obtaining the target channel state information according to the plurality pieces of third channel state information and the grouping manner for performing, in the target dimension, grouping preprocessing on the initial channel state information, further comprises: in a case where a number of resource granularities of the initial channel state information in the target dimension is not exactly divided by a grouping granularity number, removing a padded number of redundant resource granularities in at least one piece of third channel state information, wherein the redundant resource granularities correspond to resource granularities padded in the at least one piece of first channel state information.

28. The processing method according to claim 27, wherein the removing the redundant resource granularities in the at least one piece of third channel state information comprises: removing redundant resource granularities in third channel state information corresponding to at least one second target resource granularity group according to an overlapped padding position and a size of an overlapped padding resource; wherein the second target resource granularity group is a resource granularity group on which the overlapped padding is performed, the overlapped padding position characterizes a position of the second target resource granularity group, and the size of the overlapped resource characterizes a number of resource granularities padded in the second target resource granularity group.

29. The processing method according to any one of claims 20 to 28, wherein the target dimension comprises at least one of: a frequency domain dimension, a space domain dimension, a layer dimension, and a time domain dimension.

30. The processing method according to any one of claims 20 to 29, wherein before the receiving the second channel state information, the processing method further comprises: sending a grouping signaling, wherein the grouping signaling is configured to indicate a terminal to perform grouping preprocessing on the initial channel state information in the target dimension.

31. A terminal, comprising:

   at least one processor;
   a memory with one or more programs stored thereon, wherein the one or more programs, upon being executed by the at least one processor, cause the at least one processor to implement the channel state information processing method according to any one of claims 1 to 19; and

at least one I/O interface, connected between the processor and the memory, and configured to implement information interaction between the processor and the memory.

32. A base station, comprising:

at least one processor;

a memory with one or more programs stored thereon, wherein the one or more programs, upon being executed by the at least one processor, cause the at least one processor to implement the channel state information processing method according to any one of claims 20 to 30; and

at least one I/O interface, connected between the processor and the memory, and configured to implement information interaction between the processor and the memory.

33. A computer readable medium with a computer program stored thereon, wherein the computer program, when executed by a processor, implements at one of following methods:

the channel state information processing method according to any one of claims 1 to 19; and

the channel state information processing method according to any one of claims 20 to 30.

Perform grouping preprocessing on initial channel state information in a target dimension, so as to obtain a plurality of pieces of first channel state information — S11

Encode the plurality of pieces of first channel state information, so as to generate second channel state information — S12

Feed back the second channel state information — S13

**FIG. 1**

Classify a plurality of resource granularities of the initial channel state information in the target dimension into a plurality of resource granularity groups, so as to obtain the plurality pieces of first channel state information, where the plurality of resource granularity groups are in one-to-one correspondence with the plurality pieces of first channel state information — S111

Encode the plurality pieces of first channel state information to generate the second channel state information — S12

Feed back the second channel state information — S13

**FIG. 2**

EP 4 498 742 A1

| S14 |
| Receive a grouping signaling, where the grouping signaling carries a grouping parameter |

| S112 |
| Perform, in the target dimension, grouping preprocessing on the initial channel state information according to the grouping parameter, so as to obtain the plurality of first channel state information |

| S12 |
| Encode the plurality pieces of first channel state information to generate second channel state information |

| S13 |
| Feed back second channel state information |

FIG. 3

| S151 |
| Configure a first grouping configuration list, where the first grouping configuration list includes at least one grouping manner for performing grouping preprocessing on the initial channel state information |

| S152 |
| Feed back information of the first grouping configuration list |

| S11 |
| Perform grouping preprocessing on initial channel state information in a target dimension to obtain a plurality pieces of first channel state information |

| S12 |
| Encode the plurality pieces of first channel state information to generate second channel state information |

| S13 |
| Feed back the second channel state information |

FIG. 4

33

Perform, in a target dimension, grouping preprocessing on initial channel state information to obtain a plurality pieces of first channel state information

S11

Encode the plurality pieces of first channel state information to generate second channel state information

S12

Feed back the second channel state information

S13

Acquire polarization phase assistance information of an antenna

S161

Feed back the polarization phase assistance information

S162

FIG. 5

Receive second channel state information

S21

Decode the second channel state information to obtain a plurality pieces of third channel state information, where the plurality pieces of third channel state information is in one-to-one correspondence with a plurality pieces of first channel state information obtained by performing, in a target dimension, grouping preprocessing on initial channel state information

S22

Generate target channel state information according to the plurality pieces of third channel state information

S23

FIG. 6

103

I/O interface

102

Memory

104

101

Processor

FIG. 7

203

I/O interface

202

Memory

204

201

Processor

FIG. 8

Non-transitory computer
readable medium

FIG. 9

FIG. 10

FIG. 11

FIG. 12

FIG. 13

FIG. 14

FIG. 15

FIG. 16

Frequency
domain
dimension

$H_1$

$H_2$

$H_3$

$H_4$

. . .

$H_{29}$

$H_{30}$

$H_{31}$

$H_{32}$

$H_{32}/H_{31}$

$H_{31}/H_{30}$

$H_{30}/H_{29}$

First group

Seventh
group

$H_1$

$H_2$

$H_3$

$H_4$

$H_5$

. . .

$H_{31}$

$H_{32}$

$H_{32}/H_{31}$

$H_{31}/H_{30}$

$H_{30}/H_{29}$

FIG. 17A

FIG. 17B

FIG. 18

FIG. 19

FIG. 20

Polarization direction 1

| | |
|---|---|
| $H_1$ | $H_1$ |
| $H_2$ | $H_2$ |
| $H_3$ | ... |
| $H_4$ | $H_{16}$ |
| ... | |
| $H_{29}$ | |
| $H_{30}$ | |
| $H_{31}$ | |
| $H_{32}$ | |

First group

Antenna dimension

Second group

Polarization direction 2

| |
|---|
| $H_{17}$ |
| $H_{18}$ |
| ... |
| $H_{32}$ |

FIG. 21

FIG. 22

FIG. 23

FIG. 24

Antenna group 1

Phase
normalization

Antenna group 1

Antenna group 1

Polarization phase difference

Feedback

Compress
and retsore

Antenna group 2

Phase
normalization

Antenna group 2

Antenna group 2

FIG. 25

## INTERNATIONAL SEARCH REPORT

| | International application No. |
|---|---|
| | **PCT/CN2023/082882** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNABS; CNTXT; CNKI; VEN; DWPI; EXTXT; EXTXTC; 3GPP: 第一, 第二, 信道状态信息, 资源粒度, RE, REG, 上报, 填充, 重叠, first, second, CSI, PMI, CQI, RI, Resource Granularity, report, filling, overlap

**C. DOCUMENTS CONSIDERED TO BE RELEVANT**

| Category* | Citation of document, with indication, where appropriate, of the relevant passages | Relevant to claim No. |
|---|---|---|
| X | CN 105165083 A (HUAWEI TECHNOLOGIES CO., LTD.) 16 December 2015 (2015-12-16) description, pp. 5-15 | 1-8, 18-26, 29-33 |
| A | CN 105009494 A (HUAWEI TECHNOLOGIES CO., LTD.) 28 October 2015 (2015-10-28) entire document | 1-33 |
| A | CN 108933648 A (ZTE CORP.) 04 December 2018 (2018-12-04) entire document | 1-33 |
| A | US 2016050648 A1 (LG ELECTRONICS INC.) 18 February 2016 (2016-02-18) entire document | 1-33 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 June 2023** | **24 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082882**

| Patent document cited in search report | | | Publication date (day/month/year) | Patent family member(s) | | | Publication date (day/month/year) |
|---|---|---|---|---|---|---|---|
| CN | 105165083 | A | 16 December 2015 | WO | 2015003367 | A1 | 15 January 2015 |
| CN | 105009494 | A | 28 October 2015 | US | 2018091209 | A1 | 29 March 2018 |
| | | | | US | 10567061 | B2 | 18 February 2020 |
| | | | | WO | 2015074262 | A1 | 28 May 2015 |
| | | | | US | 2016269089 | A1 | 15 September 2016 |
| | | | | US | 9838106 | B2 | 05 December 2017 |
| | | | | KR | 20160086948 | A | 20 July 2016 |
| | | | | KR | 101852914 | B1 | 27 April 2018 |
| | | | | EP | 3073662 | A1 | 28 September 2016 |
| | | | | EP | 3073662 | A4 | 07 December 2016 |
| | | | | EP | 3073662 | B1 | 07 October 2020 |
| CN | 108933648 | A | 04 December 2018 | WO | 2018219068 | A1 | 06 December 2018 |
| US | 2016050648 | A1 | 18 February 2016 | KR | 20160011182 | A | 29 January 2016 |
| | | | | KR | 102229978 | B1 | 19 March 2021 |
| | | | | US | 2016056877 | A1 | 25 February 2016 |
| | | | | US | 10122481 | B2 | 06 November 2018 |
| | | | | WO | 2014171742 | A1 | 23 October 2014 |
| | | | | GB | 201517834 | D0 | 25 November 2015 |
| | | | | GB | 2527246 | A | 16 December 2015 |
| | | | | WO | 2014171739 | A1 | 23 October 2014 |

Form PCT/ISA/210 (patent family annex) (July 2022)

**REFERENCES CITED IN THE DESCRIPTION**

**Patent documents cited in the description**

- CN 202210286749